# EUROPEAN PATENT APPLICATION

(11) **EP 4 764 273 A1**
(43) Date of publication of application: **24.06.2026**
(21) Application number: 25223547.8
(22) Date of filing: 15.12.2025
(51) Int. Cl.: F16K 11/044, F16K 11/07, F16K 31/00, E03B 7/04

(54) **VALVE**

(30) Priority: 18.12.2024 GB 202418595
(71) Applicant: Kohler Mira Limited, Cheltenham, Gloucestershire GL52 5EP (GB)
(72) Inventor: LEA, Ben, Cheltenham, GL52 5EP (GB); JONES, Oliver, Cheltenham gb, GL52 5EP (GB)
(74) Representative: Barker Brettell LLP

(57) **Abstract**

A valve (100) including:
an inlet (101);
a first outlet (102); and
a thermally actuated closing member (120) operable to cause the diverter valve to transition from a first configuration to a second configuration;
wherein, in the first configuration a first fluid flow path from the inlet to the first outlet is open and in the second configuration the first fluid flow path is closed.

## Description

### TECHNICAL FIELD

The present disclosure relates to a valve, in particular, a thermally actuated valve. The valve may be a diverter valve. The disclosure also relates to a plumbing apparatus or a plumbing system comprising such a valve, e.g. a thermally actuated valve. The plumbing apparatus or the plumbing system may be an ablutionary apparatus or an ablutionary system.

### BACKGROUND

When a user wishes to use hot water from an outlet, such as a shower, it can take some time for the heat source to get the water up to temperature. In addition or as well as this, there may be water within a section of pipe leading up to an outlet (referred to as a dead leg). The user has to wait for this dead leg to be expelled from the outlet and for the water to get up to temperature. The user will often go about tasks whilst waiting, such as brushing their teeth or choosing clothes to wear, and they may not notice when the water exiting the outlet is at the desired temperature, therefore resulting in a waste of hot water.

### SUMMARY

A first aspect provides a valve including:
an inlet;
a first outlet; and
a thermally actuated closing member operable to cause the valve to transition from a first configuration to a second configuration;
wherein, in the first configuration a first fluid flow path from the inlet to the first outlet is open and in the second configuration the first fluid flow path is closed.

The thermally actuated closing member may be configured to cause the valve to transition from the first configuration to the second configuration when fluid flowing into the inlet of the valve has a temperature equal to or above a threshold temperature.

The thermally actuated closing member may be mechanically operated.

The valve may be configured to switch automatically from the second configuration to the first configuration when fluid flowing into the inlet of the valve has a temperature below a threshold temperature. The valve may comprise a resiliently deformable member, for example a spring, configured to urge the thermally actuated closing member towards a position, in which the valve is in the first configuration.

The valve may be configured to be in the first configuration when fluid flowing into the inlet of the valve has a temperature below a threshold temperature.

The valve may include a second outlet and have a second fluid flow path from the inlet to the second outlet.

The second fluid flow path may be from the inlet to the first outlet.

The second fluid flow path may be open in the first configuration, or it may be closed in the first configuration.

The second fluid flow path may be open in the second configuration.

The valve may have a first flow rate of fluid exiting the first and/or second outlets in the first configuration.

The valve may have a second flow rate of fluid exiting the first and/or second outlets in the second configuration.

The first flow rate may be greater than the second flow rate.

The first flow rate may be substantially the same as the rate of fluid flow into the inlet.

The valve may include a bypass mechanism that is configured to cause the valve to transition from the second configuration to a third configuration, wherein in the third configuration a third fluid flow path from the inlet to the first outlet is open.

The third fluid flow path may be from the inlet to the second outlet.

The first fluid flow path may be closed in the third configuration.

The second fluid flow path may be open in the third configuration.

The valve may have a third flow rate of fluid exiting the first and/or second outlets in the third configuration.

The third flow rate may be greater than the second flow rate.

The third flow rate may be substantially the same as the rate of fluid flow into the inlet.

The third flow rate may be substantially the same as the first flow rate.

The bypass mechanism may be user-operable.

The bypass mechanism may comprise a lockable bypass mechanism which, once it is activated, keeps the valve in the third configuration until the bypass mechanism is reset.

The bypass mechanism may be configured to reset and thereby open the third fluid flow path when the temperature of fluid flowing into the inlet of the valve has a temperature below a threshold temperature.

The valve may be a diverter valve.

A second aspect provides a plumbing system including:
a valve including:
   an inlet;
   a first outlet; and
   a thermally actuated closing member operable to cause the valve to transition from a first configuration to a second configuration;
wherein, in the first configuration, a first fluid flow path from the inlet to the first outlet is open and in the second configuration the first fluid flow path is closed.

The thermally actuated closing member may be configured to cause the valve to transition from the first configuration to the second configuration when fluid flowing into the inlet of the valve has a temperature equal to or above a threshold temperature.

The thermally actuated closing member may be mechanically operated.

The valve may be configured to switch automatically from the second configuration to the first configuration when fluid flowing into the inlet of the valve has a temperature below a threshold temperature. The valve may comprise a resiliently deformable member, for example a spring, configured to urge the thermally actuated closing member towards a position, in which the valve is in the first configuration.

The valve may be configured to be in the first configuration when fluid flowing into the inlet of the valve has a temperature below a threshold temperature.

The valve may include a second outlet and have a second fluid flow path from the inlet to the second outlet.

The second fluid flow path may be from the inlet to the first outlet.

The second fluid flow path may be open in the first configuration, or it may be closed in the first configuration.

The second fluid flow path may be open in the second configuration.

The valve may have a first flow rate of fluid exiting the first and/or second outlets in the first configuration.

The valve may have a second flow rate of fluid exiting the first and/or second outlets in the second configuration.

The first flow rate may be greater than the second flow rate.

The first flow rate may be substantially the same as the rate of fluid flow into the inlet.

The valve may include a bypass mechanism that is configured to cause the valve to transition from the second configuration to a third configuration, wherein in the third configuration a third fluid flow path from the inlet to the first outlet is open.

The third fluid flow path may be from the inlet to the second outlet.

The first fluid flow path may be closed in the third configuration.

The second fluid flow path may be open in the third configuration.

The valve may have a third flow rate of fluid exiting the first and/or second outlets in the third configuration.

The third flow rate may be greater than the second flow rate.

The third flow rate may be substantially the same as the rate of fluid flow into the inlet.

The third flow rate may be substantially the same as the first flow rate.

The bypass mechanism may be user-operable.

The bypass mechanism may comprise a lockable bypass mechanism which, once it is activated, keeps the valve in the third configuration until the bypass mechanism is reset.

The bypass mechanism may be configured to reset and thereby open the third fluid flow path when the temperature of fluid flowing into the inlet of the valve has a temperature below a threshold temperature.

The valve may be a diverter valve.

The plumbing system may further comprise a first fluid delivery device or a first set of one or more fluid delivery outlets in fluidic communication with the first outlet, wherein the first fluid delivery device or the first set of one or more fluid delivery outlets is operable to emit fluid in a first spray pattern.

The plumbing system may further comprise a second fluid delivery device or a second set of one or more fluid delivery outlets in fluidic communication with the second outlet, wherein the second fluid delivery device or the second set of one or more fluid delivery outlets is operable to emit fluid in a second spray pattern.

The first spray pattern may be different from the second spray pattern. The first spray pattern may have a different flow rate from the second spray pattern.

The first fluid delivery device and the second fluid delivery device may be comprised at least partially in the same housing, such as a showerhead. The first set of one or more fluid delivery outlets and the second set of one or more fluid delivery outlets may have one or more fluid delivery outlets in common. The first set of one or more fluid delivery outlets and the second set of one or more fluid delivery outlets may be comprised at least partially in the same housing, such as a showerhead.

The first fluid delivery device and/or the second fluid delivery device may include a tap, a faucet or a spray head for a shower. The spray head for a shower may be provided in the form of a fixed shower head or may be provided in the form of a handheld shower head. The first fluid delivery device and/or the second fluid delivery device may comprise a part of a sprayer, a sprinkler, a tap, a faucet or other fluid, e.g. water, delivery device, for use either indoors or outdoors in a domestic, industrial or commercial setting.

In an implementation, the valve may be disposed downstream of a means operable to provide a flow of fluid, e.g. water, at a user-specified temperature and/or flow rate. The means operable to provide a flow of fluid at a user-specified temperature and/or flow rate may comprise an instantaneous water heater or a mixer valve, e.g. a thermostatic mixer valve. The inlet of the valve may be in fluidic communication with the means operable to provide a flow of fluid at a user-specified temperature and/or flow rate.

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

### BRIEF DESCRIPTION OF FIGURES

There now follows, purely by way of example, a description of some examples of the present disclosure. The examples will be described with reference to the accompanying drawings in which:
Figure 1 shows a cross-section of a first example of a diverter valve in a first configuration;
Figure 2 shows a cross-section of the first example of the diverter valve in a second configuration;
Figure 3 shows a cross-section of a second example of the diverter valve in a first configuration;
Figure 4 shows a cross-section of the second example of the diverter valve in the first configuration;
Figure 5 shows a cross-section of the second example of the diverter valve in a second configuration;
Figure 6 shows a cross-section of the second example of the diverter valve in the second configuration;
Figure 7 shows a cross-section of the second example of the diverter valve in a third configuration;
Figure 8 shows a cross-section of the second example of the diverter valve in the third configuration;
Figure 9 shows schematically an example of a plumbing system incorporating a diverter valve;
Figure 10 shows schematically an example of an ablutionary system incorporating a diverter valve;
Figure 11 shows a cross-section of a valve housing for a third example of a diverter valve;
Figure 12 shows a cross-section of a third example of a diverter valve formed in the housing shown in Figure 11, in a first configuration;
Figure 13 shows another cross-section of the example of a valve in a first configuration;
Figure 14 shows a cross-section of the example of a valve in a second configuration; and
Figure 15 shows a cross-section of the example of a valve in a third configuration.

### DETAILED DESCRIPTION

Throughout the figures, like numerals are used for identical features.

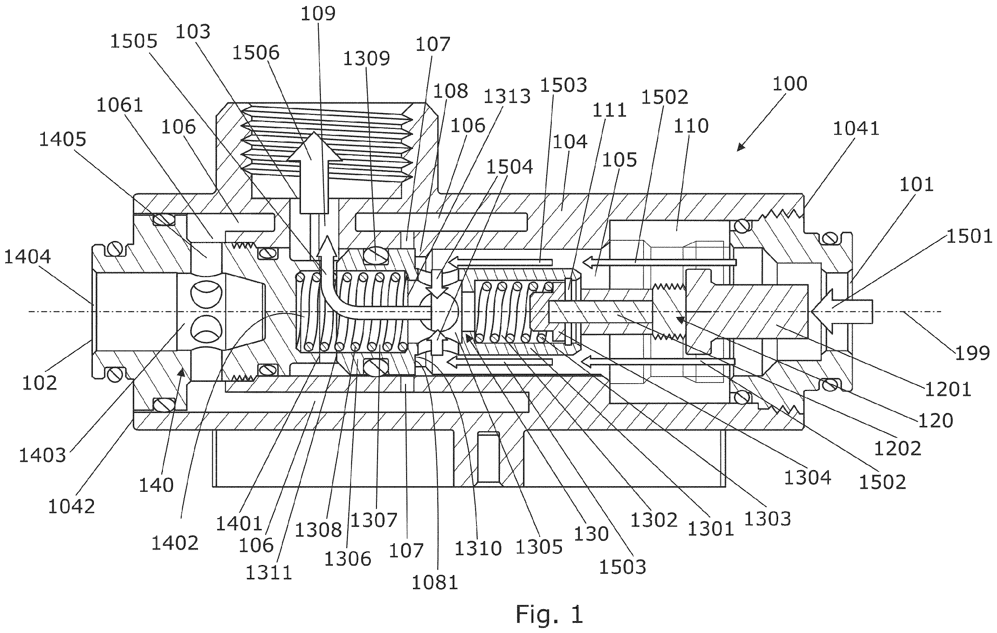

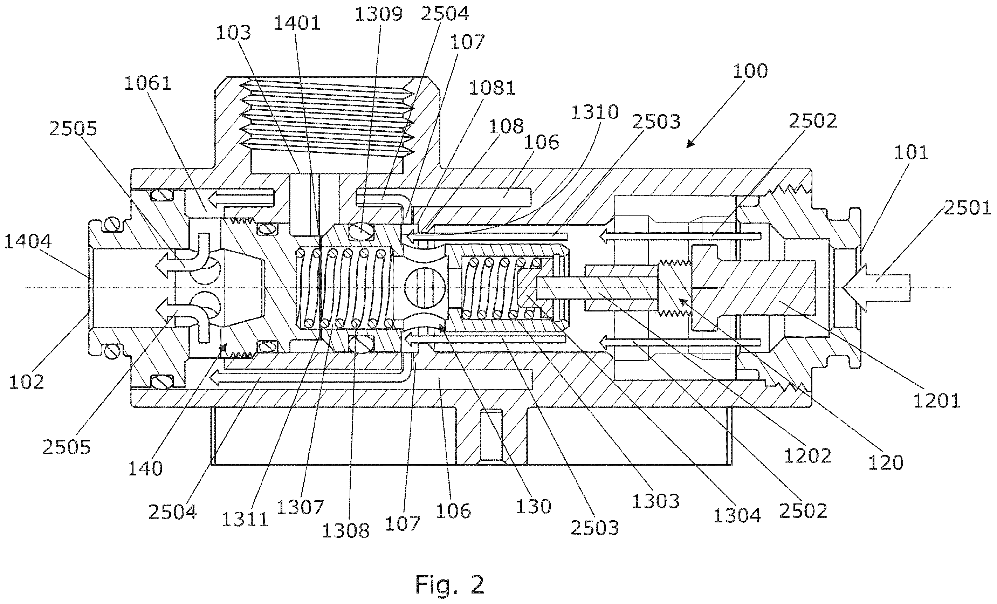

Figures 1 and 2 show cross-sections of a first example of a diverter valve 100.

The diverter valve 100 is a thermally actuated diverter valve and includes a valve body 104 that is substantially elongate along an axial direction 199. The diverter valve 100 is switchable between a first configuration (Figure 1) and a second configuration (Figure 2), as will be described below.

The valve body 104 includes a first fluid cavity 105 that is substantially cylindrical and extends through the valve body 104 along the longitudinal axis 199 of the valve body 104 from a first end of the valve body 1041 to a second end of the valve body 1042.

The first end of the valve body 1041 has an inlet 101. The second end of the valve body 1042 has a first outlet 102. The first fluid cavity 105 is delimited at a first end by the inlet 101 and at a second end by the first outlet 102. The inlet 101 and the first outlet 102 are directed along the longitudinal axis 199.

A second outlet 103 is formed in the valve body 104. The second outlet 103 is fluidically connected to a second outlet channel 109 which extends into the first fluid cavity 105 perpendicularly to the longitudinal axis 199 of the valve body 104. In the example shown in Figure 1, the second outlet 103 is between the inlet 101 and the first outlet 102. The second outlet cavity 109 may extend into the first fluid cavity 105 at angles other than 90°.

A protrusion 108 extends from the valve body 104 into the first fluid cavity 105. The protrusion 108 is between the inlet 101 and the second outlet 103.

The protrusion 108 is annular around the circumference of the body 104 and defines a restriction in the first fluid cavity 105.

The valve body 104 includes a second fluid cavity 106. The second fluid cavity 106 is formed as an annular cavity that surrounds the first fluid cavity 105 with a portion of the valve body 104 being disposed between the first fluid cavity 105 and the second fluid cavity 106.

A connecting channel 107 is formed in the portion of the valve body 104 that is disposed between the first fluid cavity 105 and the second fluid cavity 106. The connecting channel 107 is adjacent the protrusion 108, on the side of the protrusion 108 facing the first outlet 102 and may be annular.

The connecting channel 107 allows fluidic communication between the first fluid cavity 105 and the second fluid cavity 106.

In different implementations, one or more connecting channels, e.g. a plurality of connecting channels, may provide fluidic communication between the first fluid cavity 105 and the second fluid cavity 106. In some implementations, the plurality of connecting channels may be regularly spaced from one another.

The second fluid cavity 106 is fluidically connected to the first outlet 102 at an open end 1061 of the second fluid cavity 106, at the first end of the body 104.

The second outlet cavity 109 intersects that second fluid cavity 106 such that the second fluid cavity 106 annularly surrounds a portion of the second outlet cavity 109 and a portion of the valve body 104 fluidically isolates the second outlet cavity 109 from the second fluid cavity 106.

The inlet 101 may be selectively put into fluidic communication with the first outlet 102 or the second outlet 103 via the operation of the diverter valve 100.

The diverter valve 100 includes a thermally actuated member 120 that is disposed in the first fluid cavity 104 adjacent to the inlet 101. The thermally actuated member 120 in this example is in the form of a thermostat. The thermally actuated member 120 may be held in place by a supporting structure 110 formed or inserted in the first fluid cavity 105.

The thermally actuated member 120 has a cross-section that is narrower than the diameter of the first fluid cavity 105, thereby allowing, in use, fluid that flows into the diverter valve 100 via the inlet 101 to flow over and past the thermally actuated member 120. Water can also flow over and/or through the support structure.

The thermally actuated member 120 includes a thermally responsive actuator 1201 and a thermostat piston 1202. The thermally responsive actuator 1201 is arranged closer to the inlet 101 than the thermostat piston 1202. The thermostat piston 1202 extends along the longitudinal axis 199 of the valve body 104.

An end of the thermostat piston 1202 is received within the thermally responsive actuator 1201. The thermostat piston 1202 extends out of the thermally responsive actuator 1201 towards the first outlet 102.

The thermally responsive actuator 1201 is configured to cause the thermostat piston 1202 to translate towards or away from the inlet 101 and away from or towards the first outlet 102 along the longitudinal axis of the valve body 104. The thermally responsive actuator 1201 is configured to do this in response to the temperature of fluid flowing over it.

The thermostat piston 1202 has two extreme positional states - a fully retracted state and a fully extended state. The position of the thermostat piston 1202 in Figure 1 is the fully retracted state of the thermostat piston 1202.

The diverter valve 100 includes a valve piston 130 that is arranged in the first fluid cavity 105. The valve piston 130 is adjacent to the thermostat piston 1202 and extends along the longitudinal axis 199 of the valve body 104. The valve piston 130 is arranged between the thermostat piston 1202 and the first outlet 102.

The valve piston 130 is formed of a first portion 1301 and a second portion 1306. The first portion 1301 is connected to the second portion 1306 by an intermediate portion 1305. In the illustrated example, the first portion 1301, the second portion 1306 and the intermediate portion 1305 are formed as a single piece.

The first portion 1301, the second portion 1306, and the intermediate portion 1305 are substantially cylindrical, extending along the longitudinal axis 199. The first portion 1301 faces towards the inlet 101 and the second portion 1306 faces towards the first outlet 102.

The first portion 1301 includes a first cavity 1302. The first cavity 1302 extends from an open first end face into the first cylindrical portion 1301.

The thermostat piston 1202 extends through the first end face of the first cylindrical portion 1301 into the first cavity 1302.

The end of the thermostat piston 1202 is received within a thermostat piston receiver 1304. The thermostat piston receiver 1304 has a head portion that extends along the first cavity, and an annular shoulder portion.

The head portion includes an indent 1312 facing towards the inlet 101. The indent 1312 is configured to receive the end of the thermostat piston 1202.

An annular plate 111 is disposed within the first cavity 1302. The annular plate 111 is configured to prevent the thermostat piston receiver 1304 from exiting the first cavity 1302. The annular shoulder portion of the thermostat piston receiver 1304 is configured to press against the annular plate 111 when the thermostat piston 1202 is in the fully retracted state. The annular plate 111 is secured to the walls of the first cavity 1302.

A first spring 1303 is disposed within the first cavity 1302 with its longitudinal axis along the longitudinal axis 199 of the valve body 104. A first end of the first spring 1303 rests against a base of the first cavity 1302. The second end of the first spring 1303 rests against the shoulder of the thermostat piston receiver 1304, with the head portion extending into the core of the spring 1303. The first spring 1303 is thus arranged such that it is disposed in compression between the base of the first cavity 1302 and the shoulder of the thermostat piston receiver 1304.

The first portion 1301 of the valve piston 130 has a diameter smaller than the diameter of the first fluid cavity 105 such that there exists a gap between an interior surface of the first fluid cavity 105 and an outer surface of the first portion 1301.

The intermediate portion 1305 has a diameter substantially the same as the diameter of first portion 1301. As such, there exists a gap between the walls of the first fluid cavity 105 and an outer surface of the intermediate portion 1305.

The intermediate portion 1305 includes a plurality of apertures that permit fluid ingress to an interior of the intermediate portion 1305, from the exterior.

The second portion 1306 is hollow by virtue of a second cavity 1307 that runs through the length of the second portion 1306. An opening 1313 fluidically connects the interior of the intermediate portion 1305 and the second cavity 1307 such that the interior of the intermediate portion 1305 and the second cavity 1307 form a continuous cavity within the valve piston 130.

The second portion 1306 has a larger diameter than the first portion 1301 but smaller than the interior surface of the first fluid cavity 105. Therefore, there exists a smaller gap between the interior surface of the first fluid cavity 105 and an outer surface of the second portion 1306 than the gap between the interior surface of the first fluid cavity 105 and the outer surface of the first portion 1301.

A first sealing face 1310 is formed on an end of the second portion 1306 that is connected to the intermediate portion 1305. The first sealing face 1310 is substantially annular and has an inner diameter approximately equal to the diameter of the intermediate portion 1305 and an outer diameter approximately equal to the diameter of the second portion 1306.

A second sealing face 1311 is formed on an end of the second portion 1306 that is opposite the end on which the first sealing face 1310 is disposed. The second sealing face 1311 is substantially annular. The second sealing face 1311 has an inner diameter that is approximately equal to the diameter of the opening 1313 and an outer diameter that is larger than the inner diameter and smaller than the diameter of the first sealing face 1310.

The valve piston 130 includes a valve piston sealing member 1309 that extends around a circumference of the second portion 1306. The valve piston sealing member 1309 forms a fluid-tight seal between the outer surface of the second portion 1301 and the interior surface of the first fluid cavity 105.

The protrusion 108 in the first chamber forms a first valve seat 1081. The first valve seat 1081 is configured to interface with the first sealing face 1310 of the second portion 1306 of the valve piston 130, when in the first configuration. The first valve seat 1081 is substantially annular and has inner and outer diameters that are substantially the same as the inner and outer diameters of the first sealing face 1310.

A first outlet member 140 is disposed within the first fluid cavity 105 such that it blocks fluidic communication between the inlet 101 and the first outlet 102 via the first fluid cavity 105. Therefore, fluid may only flow to the first outlet 102 from the inlet 101 to by flowing through the second fluid cavity 106.

The first outlet member 140 includes a second valve seat 1401 that is configured to interface with the second sealing face 1311 of the second portion 1306 of the valve piston 130. The second valve seat 1401 is substantially annular and has inner and outer diameters that are substantially the same as the inner and outer diameters of the second sealing face 1311.

The first outlet member 140 includes an outlet member hollow 1402, in the form of an indent or recess facing towards the inlet.

A second spring 1308 is disposed partially within the second cavity 1307. The second spring 1308 is disposed such that its first end rests against a base of the second cavity 1307 that surrounds the opening 1313, where the second portion joins the intermediate portion.

The outlet member hollow 1402 is configured to receive a second end of the second spring 1308 such that the second spring 1308 is in compression between the outlet member 140 and the base of the second cavity 1307.

The first outlet member 140 includes an outlet member cavity 1403 that extends from an outlet member opening 1404 at a second end of the first outlet member 140 into the first outlet member 140. The second end of the first outlet member 140 is opposite the first end of the first outlet member 140.

The first outlet member 140 also includes an aperture section 1405. The aperture section 1405 comprises a plurality of apertures that extend through and around a circumference of the first outlet member 140. The aperture section 1405 permits fluidic communication between the second fluid cavity 106 and the outlet member cavity 1403. The aperture section 1405 is disposed on the first outlet member 140 such that it coincides with the open end 1061 of the second fluid cavity 106. Therefore, the second fluid cavity 106 is in fluidic communication with the first outlet 102 via the outlet member cavity 1403.

In the first configuration of the diverter valve 100 shown in Figure 1, the thermostat piston 1202 is in the retracted state. The second spring 1308 is pushing the valve piston 130 away from the first outlet member 140 and towards the first valve seat 1081. A gap is formed between the valve piston 130 and the first outlet member 140 and the second cavity 1307 is in fluidic communication with the second outlet 103.

The first sealing face 1310 is in sealing contact with the first valve seat 1081, with the second spring 1308 providing a force to press the first sealing face 1310 against the first valve seat 1081. The outer surface of the second portion 1306 also blocks the connecting channel 107.

In the first configuration, fluid may flow into the diverter valve 100 via the inlet 101 and then out of the diverter valve 100 via the second outlet 103 by flowing along a first fluid flow path.

The first fluid flow path leads from the inlet 101 into the first fluid cavity 105. The fluid then flows over the thermally actuated member 120 and through the first fluid cavity 105, around the first portion 1301 of the valve piston 130 and into the interior of the intermediate portion 1305 via the plurality of apertures comprised in the intermediate portion 1305.

As the first sealing face 1310 is in sealing contact with the first valve seat 1081, fluid is prevented from flowing from the first fluid cavity 105 into the connecting channel 107. Therefore, in the first configuration, no fluid flows from the inlet 101 to the second fluid cavity 106. The valve piston sealing member 1309 prevents fluid that exits the second cavity 1307 from flowing in a direction back towards the inlet 101 or the connecting channel 107. Therefore, in the first configuration, no fluid flows into the diverter valve 100 via the inlet 101 and then out of the diverter valve 100 via the first outlet 102.

The fluid then flows through the opening 1313 into the second cavity 1307. The second cavity 1307 is in fluidic communication with the second outlet 103 in the first configuration. The fluid thus flows from the second cavity 1307 to the second outlet 103 whereupon it exits the diverter valve 100. The diverter valve 100 thus diverts fluid from the inlet 101 to the second outlet 103 in the first configuration.

In Figure 1, the first fluid flow path is depicted, in order, by arrows 1501, 1502, 1503, 1504, 1505, and 1506.

In the first configuration, the second fluid flow path is open and there are no other open fluid flow paths through the diverter valve 100.

Figure 2 shows a cross-section of the first example of the diverter valve 100 in a second configuration.

In the second configuration, the thermostat piston 1202 is in the fully extended state due to the thermally responsive actuator 1201 having acted to extend the thermostat piston 1202 towards the thermostat piston receiver 1304. In the fully extended state, the thermostat piston 1202 is translated towards the valve piston 130 and therefore away from the thermally responsive actuator 1201.

The valve piston 130 is translated towards the outlet member 140 in comparison to its position in the first configuration shown in Figure 1. The valve piston 130 is now disposed such that the second sealing face 1311 is in sealing contact with the second valve seat 1401 and there is a gap between the first sealing face 1310 and the first valve seat 1081.

The second spring 1308 is compressed more in the second configuration than it is in the first configuration. The second spring 1308 resist this compression and provides a force pushing the valve piston 130 towards the inlet 101, which thereby involves pushing the thermostat piston 1202 towards the thermally responsive actuator 1201.

The thermally actuated member 120 resists translation of the thermostat piston 1202 towards the thermally responsive actuator 1201 with a force greater than the force provided by the second spring 1308 which pushes the valve piston 130 towards the inlet 101.

As such, the extended state of the thermostat piston 1202 causes the thermally actuated member 120 to provide a force that presses the second sealing face 1311 against the second valve seat 1401 such that sealing contact is made and no fluid may flow from the second cavity 1307 to the second outlet 103.

In the second configuration, fluid may flow into the diverter valve 100 via the inlet 101 and then out of the diverter valve 100 via the first outlet 102 by flowing along a second fluid flow path.

The second fluid flow path leads from the inlet 101 into the first fluid cavity 105. The fluid then flows over the thermally actuated member 120 and through the first fluid cavity 105, around the first portion 1301 of the valve piston 130 and through the restriction in the first fluid cavity 105 created by the protrusion 108. As the intermediate portion 1305 has a diameter that is smaller than the diameter of the restriction I the first fluid cavity 105, fluid can flow between the intermediate portion 1305 and the protrusion 108 and then into the connecting channel 107.

Fluid flows from the connecting channel 107 into the second fluid cavity 106, then through the second fluid cavity 106 to the open end 1061 of the second fluid cavity 106. Here, the fluid flows from the second fluid cavity 106 and into the outlet member cavity 1403 via the apertures in the aperture section 1405 of the first outlet member 140. Fluid then flows from the outlet member cavity 1403 to the first outlet 102 whereupon it exits the diverter valve 100. The diverter valve 100 thus diverts fluid from the inlet 101 to the first outlet 102 in the second configuration.

In Figure 2, the second fluid flow path is depicted, in order, by arrows 2501, 2502, 2503, 2504, and 2505.

Fluid may still flow from the first fluid cavity 105 into the second cavity 1307 via the plurality of apertures in the intermediate portion 1305 as in the first configuration, but it does not then flow from the second cavity 1307 to the second outlet 103. Rather, because the second sealing face 1311 and the second valve seat 1401 are in sealing contact, the outlet member hollow 1402 and the second cavity 1307 form a continuous bounded cavity, the only entrance to which is the plurality of apertures comprised in the intermediate portion 1305. The valve piston sealing member 1309 also prevents fluid from flowing from the first fluid cavity 105 around the second portion 1306 towards the second outlet 103. Therefore, in the second configuration, no fluid flows into the diverter valve 100 via the inlet 101 and then out of the diverter valve 100 via the second outlet 103.

In the second configuration, the second fluid flow path is open, and the first fluid flow path is closed. There are no other open fluid flow paths through the diverter valve 100. In use, when fluid having a temperature below a threshold temperature flows into the diverter valve 100, the diverter valve 100 adopts the first configuration or an intermediate configuration that is a transitory configuration between the first configuration and the second configuration. In the first configuration, fluid flows through the diverter valve via only the first fluid flow path - i.e. the first fluid flow path is open and the second fluid flow path is closed. Fluid therefore flows into the diverter valve 100 via the inlet 101 and then out of the diverter valve 100 via the second outlet 103.

The fluid that flows into the diverter valve 100 flows over the thermally actuated member 120 and there is a heat transfer between the fluid and the thermally actuated member 120.

As the temperature of fluid flowing into the diverter valve 100 increases and approaches the threshold temperature, the diverter valve 100 begin to transition from the first configuration, or the transitory configuration, to the second configuration. This transition is caused by the valve piston 130 translating from the position it is in in the first configuration towards the position it is in in the second configuration, i.e. the valve piston translates away from the thermally actuated member 120 and towards the first outlet member 140.

As the fluid flowing into the diverter valve 100 engages in heat transfer with the thermally actuated member 120, as the temperature of the fluid increases, the thermally actuated member 120 may respond by extending the thermostat piston 1202, thereby causing the thermostat piston 1202 to translate towards the extended position it is in in the second configuration. This movement of the thermostat piston 1202 is what causes the translation of the valve piston 130 described above.

As the valve piston 130 translates in the manner described above, the second spring 1308 will be further compressed between the valve piston 130 and the outlet member 140. This increase in compression means that the second spring 1308 will exert a greater force on the valve piston 130, said force acting to push the valve piston 130 towards the thermally actuated member 120 and away from the first outlet member 140.

The dynamics of the valve piston 130, and thus its position, are therefore determined by the balance of forces exerted on the valve piston 130 by the second spring 1308 and the thermostat piston 1202.

For any temperature of fluid below the threshold temperature, the valve piston 130 will adopt a position that is either the position it is in in the first configuration or a position that is between the position it is in in the first configuration and the position it is in in the second configuration.

The position of the valve piston 130, in turn, determines which fluid flow paths through the diverter valve 100 are open and closed. As discussed above, in the first configuration the first fluid flow path is open and the second fluid flow path is closed and in the second configuration the first fluid flow path is closed and the second fluid flow path is open.

For the intermediate positions of the valve piston 130, both the first fluid flow path and the second fluid flow path are open. The exact position of the valve piston 130 determines the flow rate of fluid flowing via the first fluid flow path and the second fluid flow path.

As the temperature of the fluid flowing into the diverter valve 100 increases towards the threshold temperature, the flow rate of the first fluid flow path decreases and the flow rate of the second fluid flow path increases.

When the temperature of the fluid flowing into the diverter valve 100 is equal to or above the threshold temperature, the thermostat piston 1202 is in the extended state and the first fluid flow path is closed and the second fluid flow path is open as described above. The diverter valve 100 is thus in the second configuration.

The diverter valve 100 remains in the second configuration until the thermally actuated member 120 detects or reacts to a temperature below the threshold temperature. The diverter valve 100 then transitions from the second configuration to the first configuration. The thermostat piston 1202 is caused to retract and the second spring 1308 causes the valve piston 130 to translate towards the first valve seat 1081 and thereby close the first fluid flow path and open the second fluid flow path.

The response of the diverter valve 100 to the temperature of fluid flowing through to it may be tuned by varying the properties of the thermally actuated member 120 and the second spring 1308. The threshold temperature may be tuned. The response of the diverter valve 100 as temperature increases may also be tuned - for example one could vary the properties of the thermally actuated member 120 and the second spring 1308 to reduce or increase the range of temperatures over which the flow rate of fluid exiting the divert valve 100 varies.

In some implementations, the diverter valve 100 may not comprise any transitory configurations. In these implementations, the diverter valve 100 may only be in the first configuration, the second configuration, or the third configuration. The transition from the first configuration to the second configuration may not comprise any temperature dependent transitory configurations. A snap-actuating thermally actuated member could be employed to achieve this in these implementations.

When the thermally actuated member 120 is a thermostat, as in the present example, the transition from the second configuration to the first configuration may not occur immediately when the appropriate change in fluid temperature occurs. Rather, the transition may occur when the thermally responsive actuator 1201 has cooled down to a temperature below the threshold value. In some examples, the thermostat may be instantly reactive based on fluid temperature. In some examples, an alternative thermally actuated closing member 120, such as a thermally actuated closing member comprising a shape memory alloy, may be instantly reactive based on fluid temperature.

Though a given arrangement and structure of fluid cavities has been described in relation to the diverter valve 100 shown in Figure 1 and Figure 2, the person skilled in the art, in light of the present description, appreciates that this specific arrangement is not limiting. Any suitable arrangement of fluid cavities may be employed, and many will now occur to the person skilled in the art.

Additionally, though a given thermally actuated member 120 and valve piston 130 arrangement has been described, the person skilled in the art, in light of the present description, appreciates that this specific arrangement is not limiting. Any suitable means for blocking and unblocking fluid flow paths through the diverter valve 100 may be employed, and many will now occur to the person skilled in the art.

The diverter valve 100 may further include a bypass mechanism. The bypass mechanism may be operable to cause the diverter valve 100 to transition from the second configuration to a third configuration. In the third configuration a third fluid flow path from the inlet 101 to the first outlet 102 may be open.

The second fluid flow path may be open in the third configuration. The first fluid flow path may be closed in the third configuration.

The bypass mechanism may be user-operable. The bypass mechanism may be a locking bypass mechanism, i.e., once it is activated, the diverter valve 100 may remain in the third configuration until the bypass mechanism is reset.

The bypass mechanism may be configured to reset and thus close the third fluid flow path and cause the diverter valve 100 to transition to the first configuration when the temperature of fluid flowing into the inlet 101 of the diverter valve 100 has a temperature below the threshold temperature.

In some implementations, the diverter valve 100 may not comprise the second outlet 103, or the second outlet 103 may be blocked such that fluid may not flow from the second outlet 103. This would allow the diverter valve 100 to function as a binary on/off valve. In these implementations, the diverter valve 100 would have a first configuration wherein the first fluid flow path is open and a second configuration wherein the first fluid flow path is closed. There would be no other fluid flow paths in these implementations. The diverter valve 100 would therefore act like an on/off valve rather than a diverter valve.

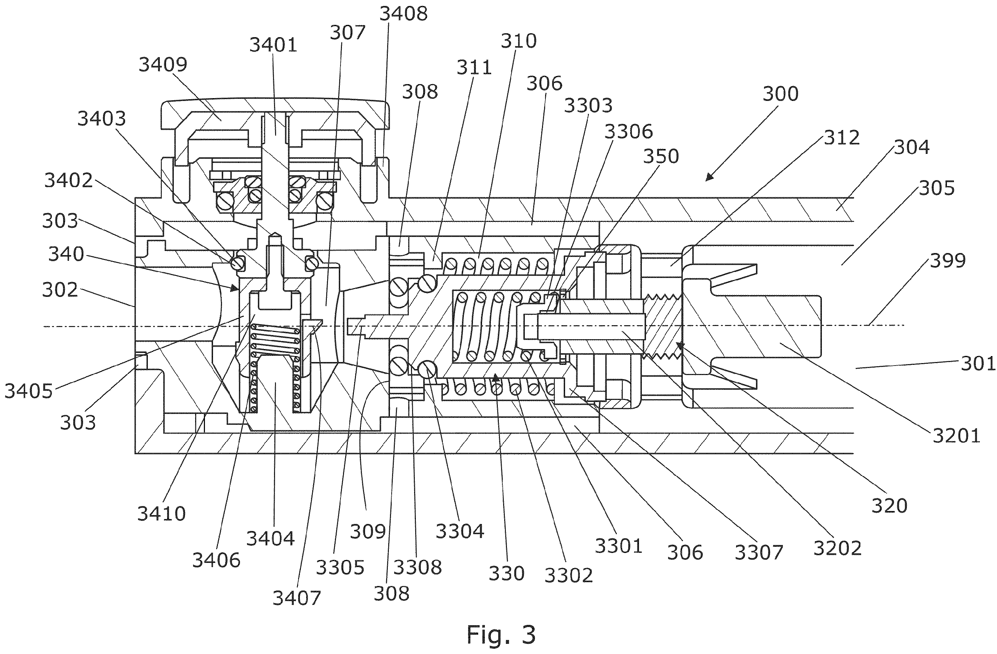

Figures 3 to 8 show cross-sections of a second example of a diverter valve 300.

The diverter valve 300 is a thermally actuated diverter valve and includes a valve body 304 that is substantially elongate along a longitudinal axis 399 of the valve body 304. The diverter valve 300 has a first configuration, a second configuration, and a third configuration.

In use, there is a first fluid flow path, a second fluid flow path, and a third fluid flow path which fluid may follow as it flows through the diverter valve 300. Different combinations of these three fluid flow paths are opened and closed in the three configurations of the diverter valve 300.

The valve body 304 includes an inlet cavity 305 that is substantially cylindrical along the longitudinal axis 399 and extends from a first end of the valve body 304 part-way into the valve body 304 along a longitudinal axis 399 of the valve body 304.

The first end of the valve body 304 has an inlet 301. The inlet cavity 305 is thus delimited at a first end by the inlet 301.

The valve body 304 includes a first fluid cavity 306 that is annular. The first fluid cavity 306 extends from a second end of the valve body 304 part-way into the valve body 304 along and around a longitudinal axis 399 of the valve body 304 and meets the inlet cavity 305.

The inlet cavity 305 and the first fluid cavity 306 are in fluidic communication. The first fluid cavity 306 is delimited at the second end of the valve body 304 by a first outlet 302 of the valve.

The valve body 304 includes a second fluid cavity 307. The second fluid cavity 307 is formed as a roughly cylindrical cavity in the valve body 304 that extends from the second end of the valve body 304 part-way into the valve body 304 along a longitudinal axis 399 of the valve body 304. The second fluid cavity 307 is disposed such that the first fluid cavity 306 surrounds the second fluid cavity 307, with a portion of the valve body 304 being disposed between the first fluid cavity 306 and the second fluid cavity 307. The second fluid cavity 307 is delimited at the second end of the valve body 304 by a second outlet 303.

The valve body 304 includes a valve piston cavity 310. The valve piston cavity 310 is roughly cylindrical and is disposed along the longitudinal axis 399 of the valve body 304 between the second fluid cavity 307 and the inlet cavity 305. The valve piston cavity 310 is delimited at a first end by the inlet cavity 305 and at a second end by the second fluid cavity 307.

Along the axial direction, the inlet cavity 305 extends until it meets both the valve piston cavity 310 and the first fluid cavity 306, arranged annularly around the valve piston cavity 310. The internal diameter of the inlet cavity 305 is the same as the first fluid cavity 306 and the valve piston cavity 310 combined. As discussed above, the first fluid cavity 306 extends to the second end of the valve body 304. A space is defined by the first fluid cavity 306, extending along the axis from the inlet cavity 305to the second end. The valve piston cavity 310 extends for a portion of this length, and the second fluid cavity 307 extends for the rest of the length, between the valve piston cavity 310 and the second end.

The arrangement of the inlet cavity 305, the valve piston cavity 310, and the second fluid cavity 307 is such that in the absence of any other components in the diverter valve 300, a continuous cavity would be formed that fluidically connects the inlet 301 to the first outlet 302.

The valve body 304 includes an annular protrusion 311 that extends from the valve body 304 into the valve piston cavity 310. This annular protrusion 311 defines a circular opening in the valve body 304 along the longitudinal axis 399. The circular opening in the valve body 304 defines the boundary between the valve piston cavity 310 and the second fluid cavity 307.

The valve body 304 includes a connecting channel 308 that is disposed partway along the length of the first fluid cavity 306. The connecting channel 308 extends in a direction perpendicular to the longitudinal axis 399 of the valve body 304. The connecting channel 308 puts the first fluid cavity 306 in fluidic communication with the second fluid cavity 307.

There is a bypass opening (not shown in Figure 3) in the valve body 304 that fluidically connects the first fluid cavity 306 and the second fluid cavity 307. In the first configuration depicted in Figure 3, a bypass mechanism 340 seals the opening such that the first fluid cavity 306 and the second fluid cavity 307 are not in fluidic communication via the bypass opening.

The diverter valve 300 includes a thermally actuated member 320. The thermally actuated member 320 is disposed at least partially in the inlet cavity 305 such that, in use, fluid entering the inlet 301 flows over the thermally actuated member 320. The thermally actuated member 320 in this example is in the form of a thermostat.

The thermally actuated member 320 may be held in place by a supporting formation 312 formed or inserted in the inlet cavity 305. The thermally actuated member 320 has a cross-section that is narrower than the diameter of the inlet cavity 305, thereby allowing, in use, fluid that flows into the diverter valve 300 via the inlet 301 to flow over and past the thermally actuated member 320.

The thermally actuated member 320 includes a thermally responsive actuator 3201 and a thermostat piston 3202. The thermally responsive actuator 3201 is arranged closer to the inlet 301 than the thermostat piston 3202. The thermostat piston 3202 is arranged to be parallel to and along the longitudinal axis 399 of the valve body 304.

The thermostat piston 3202 is arranged to be received partially within the thermally responsive actuator 3201 and to extend outside the thermally responsive actuator 3201.

The thermally responsive actuator 3201 is configured to cause the thermostat piston 3202 to translate towards and away from the inlet 301 along the longitudinal axis 399. The thermally responsive actuator 3201 is configured to do this in response to the temperature of fluid flowing over it exceeds a threshold temperature.

The thermostat piston 3202 has two extreme positional states - a fully retracted state and a fully extended state. The position of the thermostat piston 202 in Figure 3 is the fully retracted state of the thermostat piston 3202.

The diverter valve 300 includes a valve piston 330 disposed mainly in the valve piston cavity 310. The valve piston 330 extends out of the valve piston cavity 310 into the second fluid cavity 307. The valve piston 330 is disposed in the valve piston cavity 310 such that it acts as a boundary between the inlet cavity 305 and the second fluid cavity 307. The valve piston 330 is disposed such that it is adjacent to the thermally actuated member 320 along the longitudinal axis 399. The valve piston 330 is translatable along the longitudinal axis 399 of the valve body 304 in use.

The valve piston 330 is substantially elongate along the longitudinal axis 399. The valve piston 330 includes a spring cavity that extends from a first end of the valve piston 330 part-way into the valve piston 330. The first end of the valve piston 330 is the end of the valve piston 330 that is closer to the inlet 301.

The valve piston 330 includes a first valve piston spring 3301 that is arranged within the valve piston cavity 310 such that a first end of the first valve piston spring 3301 rests against a base of the spring cavity and the longitudinal direction of the first valve piston spring 3301 is parallel to the longitudinal axis 399 of the valve body 304.

The valve piston 330 includes a thermostat piston receiver 3303 that is disposed within the spring cavity. The thermostat piston receiver 3303 has a head portion that is disposed within a central cavity of the first valve piston spring 3301 and a shoulder portion against which a second end of the first valve piston spring 3301 rests. The first valve piston spring 3301 is thus arranged such that it is disposed in compression between the base of the spring cavity and the shoulder of the thermostat piston receiver 3303.

The thermostat piston receiver 3303 includes a hollow 3306 which is configured to receive part of the thermostat piston 3202.

An annular plate 350 is disposed within the spring cavity of the valve piston 330. The annular plate 350 is configured to prevent the thermostat piston receiver 3303 from exiting the spring cavity. The shoulder portion of the thermostat piston receiver 3303 is configured to press against the annular plate 350 when the thermostat piston 3202 is in the fully retracted state. The annular plate 350 is secured to the walls of the spring cavity.

The valve piston 330 includes a second valve piston spring 3302 that is disposed around a circumference of the valve piston 330. A first end of the second valve piston spring 3302 rests against the annular protrusion 311 that extends from the valve body 304 into the valve piston cavity 310. The first end of the second spring 3302 rests against the side of the protrusion 311 facing towards the inlet 301. A second of the second valve piston spring 3302 rests against the shoulder portion 3307 of the valve piston 330. The second valve piston spring 3302 is thus arranged such that it is in compression between the annular protrusion 311 and the shoulder portion of the valve piston 330.

The valve piston 330 also includes a pin 3305 which is in the form of a protrusion extending from a second end of the valve piston 330, said second end of the valve piston 330 being opposite the first end of the valve piston 330. The pin 3305 extends into the second fluid cavity 307.

The valve piston 330 includes a sealing face 3308 which is formed facing towards the second end of the valve piston 330 and has a trapezoidal cross-section. The sealing face 3308 is disposed in the second valve cavity 307 in all configurations of the diverter valve 300.

A valve piston sealing member 3304 extends around a circumference of the sealing face 3308. The valve piston sealing member 3304 is disposed in an annular groove that extends around a circumference of the sealing face 3308, behind the sealing face 3308 towards the inlet.

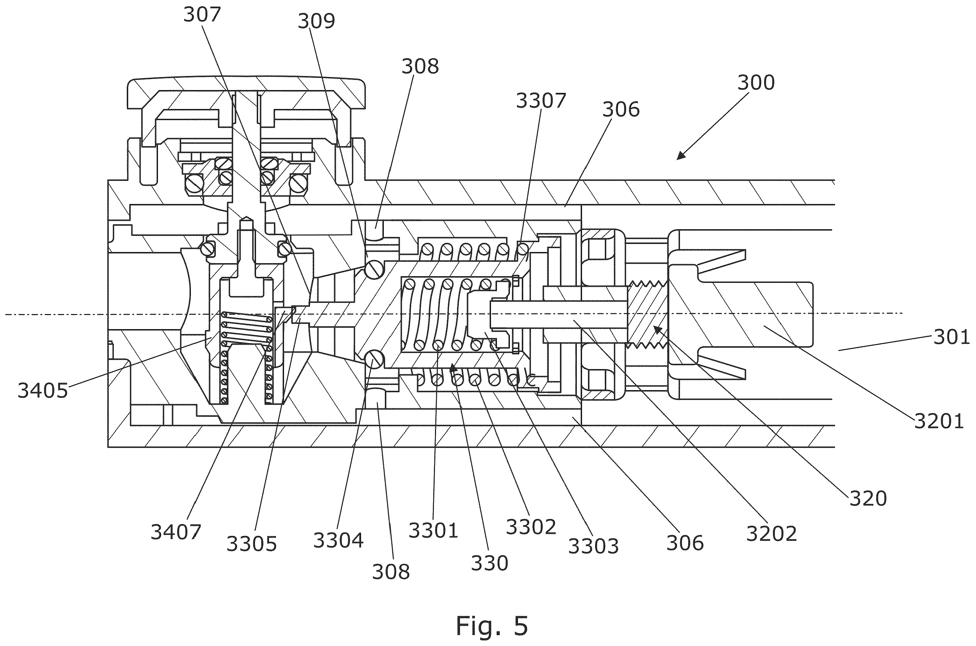

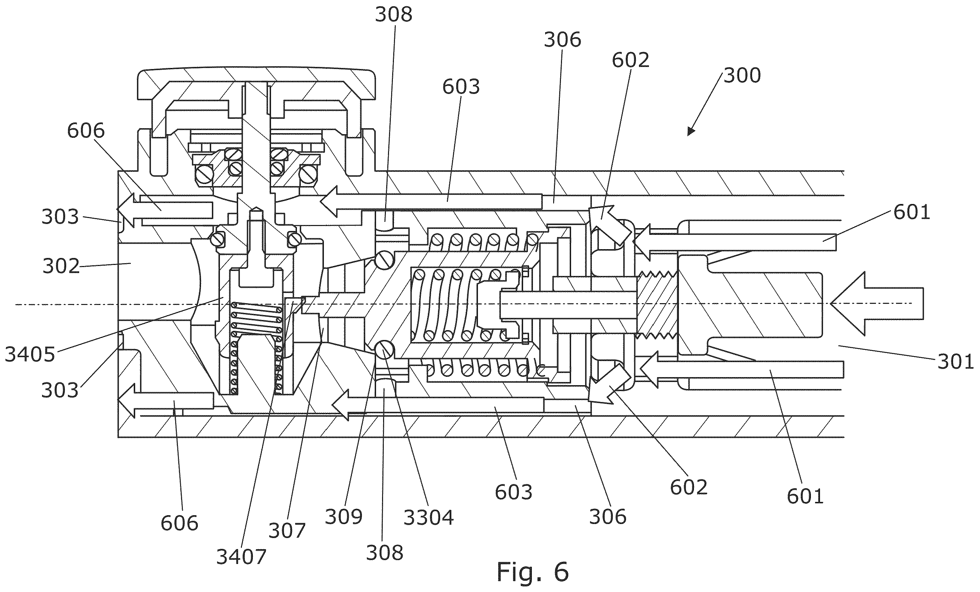

The valve piston sealing member 3304 is configured to make, in use, sealing contact with the valve seat 309 when the valve piston 330 is translated towards the valve seat 309. The sealing contact is such that the connecting channel 308 and the second fluid cavity 307 are fluidically isolated from one another, when the diverter valve 300 is in the second configuration (Figures 5 and 6).

The diverter valve 300 includes a bypass mechanism 340. The bypass mechanism 340 is configured to allow a user to, in use, put the first fluid cavity 306 and the second fluid cavity 307 in fluidic communication via the bypass opening.

The bypass mechanism 340 includes a bypass housing 3408 that is formed on an exterior surface of the valve body 304. The bypass housing 3408 extends away from the exterior surface of the valve body 304 in a direction perpendicular to the longitudinal axis 399 of the valve body 304. The bypass housing 3408 is roughly cylindrical.

The bypass mechanism 340 includes a bypass actuator 3409. The bypass housing 3408 and the bypass actuator 3409 are configured to mutually interface with one another such that the bypass actuator 3409 can translate in a linear path in a direction perpendicular to the longitudinal axis 399 of the valve body 304. In this example, this is done by a channel in the bypass housing 3408 which is perpendicular to the longitudinal axis 399 of the valve body 304 and a protrusion on the bypass actuator 3409 that is configured to be received and translated in said channel.

The bypass mechanism 340 includes a bypass piston 3401. The bypass piston 3401 extends into the valve body 304 perpendicularly to the longitudinal axis 399 of the valve body 304. A first end of the bypass piston 3401 is received in and connected to the bypass actuator 3409. A second end of the bypass piston 3401 extends into the second fluid cavity 307.

The second end of the bypass piston 3401 includes a bypass piston sealing member 3402 that extends around a circumference of the second end of the bypass piston 3401. The bypass piston sealing member 3402 is configured to make sealing contact with a bypass valve seat 3403 that surrounds the bypass opening. The sealing contact is such that the when the sealing contact is made, fluid cannot flow from the first fluid cavity 306 to the second fluid cavity 307 via the bypass opening.

The second end of the bypass piston 3401 is connected to a first end of a bypass spring enclosure 3405. The bypass spring enclosure 3405 is substantially cylindrical and extends away from the second end of the bypass piston 3401 in a direction perpendicular to the longitudinal axis 399 of the valve body 304. The bypass spring enclosure 3405 is disposed entirely within the second fluid cavity 307.

A bypass spring enclosure cavity 3410 that is cylindrical extends from a second end of the bypass spring enclosure 3405 part-way into the bypass spring enclosure 3405. The second end of the bypass spring enclosure 3405 thus comprises a circular opening.

A bypass support 3404 extends from the valve body 304 into the second fluid cavity 307. A bypass spring 3406 is disposed around a circumference of the bypass support 3404 such that a first end of the bypass spring 3406 makes contact with the valve body 304 adjacent to the bypass support 3404, i.e., the first end of the bypass spring 3406 rests against the valve body 304.

A portion of the bypass support 3404 is received within the bypass spring enclosure cavity 3410. A second end of the bypass spring 3406 is also received within the bypass spring enclosure cavity 3410. The bypass spring enclosure 3405 thus encloses a portion of both the bypass spring 3406 and the bypass support 3404.

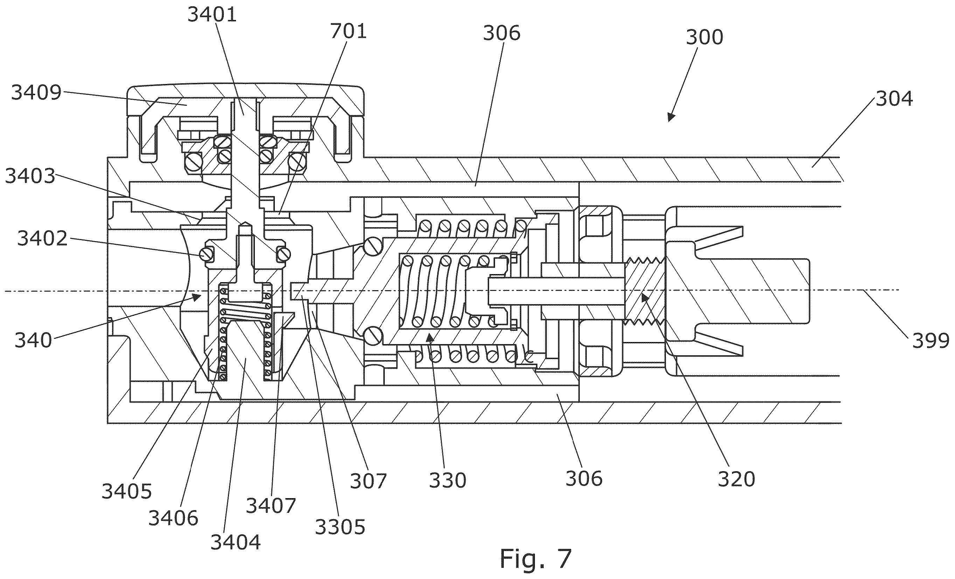

A clip 3407 (Figure 7) extends from an outer surface of the bypass spring enclosure 3405. The clip 3407 is configured to interface with the pin 3305 of the valve piston 330 in order to create a latching-type mechanism - the operation of this mechanism will be described in more detail below.

The clip has a first surface parallel to the axial direction and an opposing second surface that is inclined. The first surface faces towards the bypass housing 3408 and the inclined surface away from the bypass housing 3408.

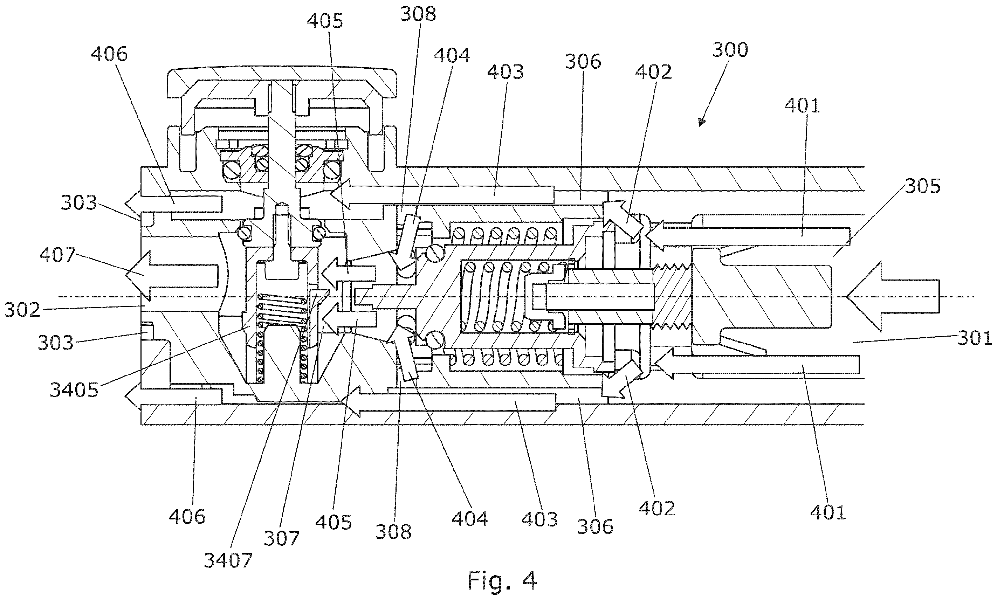

In the first configuration depicted in Figure 3 and 4, the thermostat piston 3202 is in the fully retracted state. The second valve piston spring 3302 resists compression between the valve body 304 and the shoulder portion 3307 of the valve piston 330 and thus exerts a pushing force on the valve piston 330, pushing it towards the thermally actuated member 320.

The thermally actuated member 320 resists further retraction of the thermostat piston into the thermally responsive actuator 3201 and the first valve piston spring 3301 resists compression between the base of the valve piston cavity and the thermostat piston receiver 3303. The valve piston 330 is thus in equilibrium and stationary inside the diverter valve 300.

The valve piston 330, in the first configuration, rests such that the valve piston sealing member 3304 does not make contact with the valve seat 309. The first fluid cavity 306 is thus in fluidic communication with the second fluid cavity 307 via the connecting channel 308.

The bypass mechanism 340 is configured to seal the bypass opening in the first configuration. The bypass spring 3406 resists compression between the valve body 304 and the bypass spring enclosure 3405, thereby exerting a pushing force on the bypass piston 3401 and forcing the second end of the bypass piston 3401 towards the bypass opening such that the bypass piston sealing member 3402 makes sealing contact with the bypass valve seat 3403. No fluid communication is thus possible between the first fluid cavity 306 and the second fluid cavity 307 via the bypass opening.

Figure 4 shows a cross-section of the second example of the diverter valve 300 in the first configuration with arrows showing the path that fluids take through the diverter valve 300, in use.

The diverter valve 300 in the first configuration has two open fluid flow paths - the first fluid flow path and the second fluid flow path - and one closed fluid flow path - the third fluid flow path. The first fluid flow path leads from the inlet 301 to the first outlet 302. The second fluid flow path leads from the inlet 301 to the second outlet 303.

Both the first and second fluid flow paths share a common portion of their paths before they diverge from one another. Both the first and second fluid flow paths flow into the inlet 301 and then through the inlet cavity 305 and into the first fluid cavity 306. Arrows 401 and 402 show this common portion of the first and second fluid flow paths.

Both fluid flow paths then continue to flow along the first fluid cavity 306 as shown by arrows 403.

The first fluid flow path continues further along the first fluid cavity 306 rather than flowing into the connecting channel 308 and arrives at the first outlet 303 as shown by arrows 406.

The second fluid flow path diverges from the first fluid flow path where the connecting channel 308 joins the first fluid cavity 306. The second fluid flow path flows from the first fluid cavity 306 into the connecting channel 308 and then into the second fluid cavity 307 as shown by arrows 404.

The second fluid flow path flows from the connecting channel 308 into the second fluid cavity 307. In the second fluid cavity 307, the second fluid flow path flows past the bypass mechanism 340 and arrives at the second outlet as shown by arrows 405 and 407.

The first fluid flow path thus follows the path displayed, in order, by arrows 401, 402, 403, and then 406.

The second fluid flow path thus follows the path displayed, in order, by arrows 401, 402, 403, 404, 405, and then 407.

The common portion of the first fluid flow path and the second fluid flow path is displayed, in order, by arrows 401, 402, and 403.

In the first configuration of the diverter valve 300, both the first fluid flow path and the second fluid flow path are open. Therefore, fluid may flow into the inlet 301 and then via either the first or second fluid flow path before exiting the diverter valve 300 via the first outlet 302 or the second outlet 303.

Figure 5 and 6 shows a cross-section of the diverter valve 300 in the second configuration.

In the second configuration, the thermostat piston 3202 is in the extended state due to the thermally responsive actuator 3201 having acted to extend the thermostat piston 3202 towards the thermostat piston receiver 3303. In the extended state, the thermostat piston 3202 is translated towards the valve piston 330 and therefore away from the thermally responsive actuator 3201.

The valve piston 330 is translated towards the valve seat 309 in comparison to its position in the first configuration shown in Figure 3 and Figure 4. The valve piston 330 is now disposed such that the valve piston sealing member 3304 makes sealing contact with the valve seat 309. The sealing contact is such that the first fluid cavity 306 and the second fluid cavity 307 are not in fluidic communication with one another via the connecting channel 308.

The first valve piston spring 3301 resists compression between the base of the valve piston cavity and the shoulder portion of the valve piston receiver 3303, thereby causing the valve piston 330 to be translated toward the valve seat 309. This translatory motion compresses the second valve piston spring 3302 between the shoulder portion 3307 of the valve piston 330 and the valve body 304.

The bypass mechanism 340 has the same arrangement in the second configuration of the diverter valve 300 as it does in the first configuration of the diverter valve 300. In this configuration, the end of the pin 3305 engages the inclined surface on the clip 3407.

The second valve piston spring 3302 is compressed more in the second configuration than it is in the first configuration. The second valve piston spring 3302 resists this compression and provides a force pushing the valve piston 330 towards the inlet 301, which thereby involves pushing the thermostat piston 3202 towards the thermally responsive actuator 3201.

The thermally actuated member 320 resists translation of the thermostat piston 3202 towards the thermally responsive actuator 3201 with a force greater than the force provided by the second valve piston spring 3302 which pushes the valve piston 340 towards the inlet 301.

As such, the extended state of the thermostat piston 3202 causes the thermally actuated member 320 to provide a force that presses the valve piston sealing member 3304 against the valve seat 309 such that sealing contact is made and no fluid may flow from the first fluid cavity 306 to the second fluid cavity 307 via the connecting channel 308.

Figure 6 shows a cross-section of the second example of the diverter valve in the second configuration with arrows showing the path that fluids take through the diverter valve 300, in use.

The diverter valve 300 in the second configuration has only one open fluid flow path - the first fluid flow path - and two closed fluid flow paths - the second and third fluid flow paths. The first fluid flow path is the same as the first fluid flow path described in relation to Figure 4 above.

The first fluid flow path proceeds along the path depicted by arrows 601, 602, 603, and then 606.

The second fluid flow path is closed in the second configuration of the diverter valve 300. Fluid may not flow from the first fluid cavity 306 to the second fluid cavity 307 via the connecting channel 308, due to the sealing contact between the valve piston sealing member 3304 and the valve seat 309.

In the second configuration of the diverter valve 300, therefore, fluid may only flow from the inlet 301 to the second outlet 303, and this flow is via the first fluid flow path. No fluid may flow from the inlet 301 to the first outlet 302.

Figure 7 shows a cross-section of the second example of the diverter valve 300 in the third configuration.

In the third configuration, the valve piston 330 and the thermally actuated member 320 are arranged in the same way as they are in the second configuration.

The bypass mechanism 340 is arranged such that the first fluid cavity 306 and the second fluid cavity 307 are in fluidic communication with one another via the bypass opening 701. The bypass actuator 3409, compared to its position in the first and second configurations, is translated away from the bypass housing towards the bypass support 3404 and the valve body 304.

To engage the third configuration, the bypass actuator 3409 is depressed downwards, for example by a user. The inclined surface of the clip 3407 urges the pin 3305 back against the spring force, allowing the bypass piston 3401 to move downwards towards the bypass support 3404, and, as a result, increase the compression of the bypass spring 3406. Once the clip is past the pin 3305, the spring urges the pin back to its original position.

This movement of the bypass piston 3401 is such that the bypass spring enclosure 3405 is translated towards the bypass support 3404 such that the bypass spring enclosure 3405 encloses a greater portion of the bypass support 3404.

This position of the bypass spring enclosure 3405 compresses the bypass spring 3406 between the bypass spring enclosure 3405 and the valve body 304. Without any other external forces, the bypass spring 3406 would resist this compression and push the bypass spring enclosure 3405 away from the bypass support 3404 and return the bypass mechanism 340 to the arrangement it has in the first and second configurations, i.e., the bypass piston sealing member 3402 would make sealing contact with the bypass valve seat 3403, thereby closing the bypass opening 701.

In the third configuration, as the bypass spring enclosure 3405 is pushed away from the bypass support 3404 by the bypass spring 3406, it is prevented from further translation by the pin 3305 of the valve piston 330. The first surface of the clip 3407 catches on the pin 3305 and the bypass mechanism 340 is locked in position such that the bypass opening 701 remains open and the first fluid cavity 306 and the second fluid cavity 307 are in fluidic communication via the bypass opening 701.

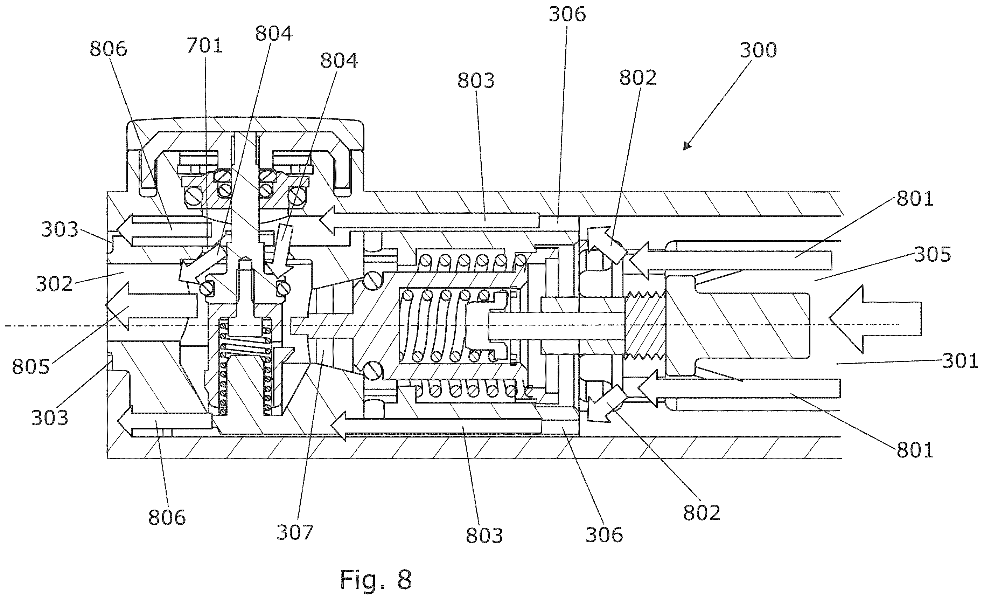

Figure 8 shows a cross-section of the second example of the diverter valve 300 in the third configuration with arrows showing the path that fluids take through the diverter valve 300, in use.

The diverter valve 300 in the third configuration has two open fluid flow paths - the second fluid flow path and the third fluid flow path - and one closed fluid flow path - the first fluid flow path. The second fluid flow path is the same as described in Figure 6.

The second fluid flow path proceeds from the inlet 301 to the second outlet 303 along the path depicted, in order, by the arrows 801, 802, 803, and then 806.

The third fluid flow path proceeds from the inlet 301 into the inlet cavity and then into the first fluid cavity 306. This is depicted by arrows 801 and 802. Fluid then flows along the first fluid cavity 306 - this is depicted by arrows 803. Fluid then flows from the first fluid cavity 306 into the second fluid cavity 307 via the bypass opening 701 - this is depicted by arrows 804. Fluid then flows from the second fluid cavity 307 to the outlet 302 and exits the diverter valve 300 - this is depicted by arrow 805.

The third fluid flow path proceeds from the inlet 301 to the first outlet 302 along the path depicted, in order, by arrows 801, 802, 803, 804, and then 805.

As such, the second fluid flow path and the third fluid flow path share a common portion of their path - namely the portion depicted by arrows 801, 802, and 803.

In the third configuration of the diverter valve 300, both the second and the third fluid flow path are open, i.e. fluid may flow into the inlet 301 and then via either the second or third fluid flow path before exiting the diverter valve 300 via the first outlet 302 or the second outlet 303.

The open and closed fluid flow paths through the diverter valve 300 in each of its three configurations are outlined in the below table:

| Configuration | First fluid flow path | Second fluid flow path | Third fluid flow path | Flow through first outlet? | Flow through second outlet? |
|---|---|---|---|---|---|
| First configuration | Open | Open | Closed | Yes | Yes |
| Second configuration | Closed | Open | Closed | Yes | No |
| Third configuration | Closed | Open | Open | Yes | Yes |

In use, when fluid having a temperature below a threshold temperature flows into the diverter valve 300, the diverter valve 300 adopts the first configuration or an intermediate configuration that is a transitory configuration between the first configuration and the second configuration. In the first configuration, fluid flows through the diverter valve via the first fluid flow path and the second fluid flow path. Fluid therefore flows into the diverter valve 300 via the inlet 301 and then out of the diverter valve 300 via both the first outlet 302 and the second outlet 303.

The fluid that flows into the diverter valve 300 flows over the thermally actuated member 320 and there is a heat transfer between the fluid and the thermally actuated member 320.

As the temperature of fluid flowing into the diverter valve 300 increases and approaches the threshold temperature, the diverter valve 300 begins to transition from the first configuration, or the transitory configuration it is in, to the second configuration. This transition is caused by the valve piston 330 translating from the position it is in in the first configuration towards the position it is in in the second configuration, i.e. the valve piston translates away from the thermally actuated member 320 and towards the valve seat 309.

As the fluid flowing into the diverter valve 300 engages in heat transfer with the thermally actuated member 320, as the temperature of the fluid increases, the thermally actuated member 320 may respond by extending the thermostat piston 3202, thereby causing the thermostat piston 3302 to translate towards the extended position it is in in the second configuration. This movement of the thermostat piston 3202 is what causes the translation of the valve piston 330 described above.

As the valve piston 330 translates in the manner described above, the second valve piston spring 3302 is further compressed between the valve piston 330 and the annular protrusion 311. This increase in compression means that the second valve piston spring 3302 will exert a greater force on the valve piston 330, said force acting to push the valve piston 330 towards the thermally actuated member 320 and away from the valve seat 309.

The dynamics of the valve piston 330, and thus its position, are therefore determined by the balance of forces exerted on the valve piston 330 by the second valve piston spring 3302 and the thermostat piston 3202.

For any temperature of fluid below the threshold temperature, the valve piston 330 will adopt a position that is either the position it is in in the first configuration or a position that is between the position it is in in the first configuration and the position it is in in the second configuration.

The position of the valve piston 330, in turn, determines which fluid flow paths through the diverter valve 100 are open and closed. As discussed above, in the first configuration the first fluid flow path and second fluid flow path are open, and the third fluid flow path is closed. In the second configuration, the first fluid flow path and third fluid flow path are closed, and the second fluid flow path is open.

For the intermediate positions of the valve piston 330, both the first fluid flow path and the second fluid flow path are open. The exact position of the valve piston 330 determines the flow rate of fluid flowing via the first fluid flow path and the second fluid flow path.

As the temperature of the fluid flowing into the diverter valve 300 increases towards the threshold temperature, the flow rate of the first fluid flow path decreases.

When the temperature of the fluid flowing into the diverter valve 100 is equal to or above the threshold temperature, the thermostat piston 3202 is in the extended state and the first fluid flow path is closed (i.e. decreased to zero) and the second fluid flow path is open as described above. The diverter valve 300 is thus in the second configuration.

The diverter valve 300 will remain in the second or third configuration until the thermally actuated member 320 detects or reacts to a temperature below the threshold temperature. The diverter valve 300 then transition from the second or third configuration to the first configuration. The thermostat piston 3202 is caused to retract and the second valve piston spring 3302 causes the valve piston 330 to translate towards the thermally actuated member 320, thereby opening the first fluid flow path.

When the valve is transitioning from the third configuration to the first configuration as described above, the movement of the valve piston 330 also causes the bypass piston 3401 to be pushed, by the bypass spring 3406, towards the bypass valve seat 3403 such that bypass opening 701 is blocked, thereby closing the third fluid flow path.

The response of the diverter valve 300 to the temperature of fluid flowing through to it may be tuned by varying the properties of the thermally actuated member 320 and the second valve piston spring 3302. The threshold temperature may be tuned. The response of the diverter valve 300 as temperature increases may also be tuned - for example one could vary the properties of the thermally actuated member 320 and the second valve piston spring 3302 to reduce or increase the range of temperatures over which the flow rate of fluid exiting the divert valve 300 varies.

In some implementations, the diverter valve 300 may not comprise any transitory configurations. In these implementations, the diverter valve 300 may only be in the first configuration, the second configuration, or the third configuration. The transition from the first configuration to the second configuration may not comprise any temperature dependent transitory configurations. A snap-actuating thermally actuated member could be employed to achieve this in these implementations.

Though a given arrangement of fluid cavities has been described in relation to the diverter valve 300 shown in Figure 3 to Figure 8, the person skilled in the art, in light of the present description, appreciates that this specific arrangement is not limiting. Any suitable arrangement of fluid cavities may be employed, and many will now occur to the person skilled in the art.

Additionally, though a given thermally actuated member 320 and a valve piston 330 arrangement has been described, the person skilled in the art, in light of the present description, appreciates that this specific arrangement is not limiting. Any suitable means for blocking and unblocking fluid flow paths through the diverter valve 300 may be employed, and many will now occur to the person skilled in the art.

Though a given bypass mechanism 340 has been described, the person skilled in the art, in light of the present description, appreciates that this specific bypass mechanism 340 is not limiting. Any suitable bypass mechanism may be employed, and many will now occur to the person skilled in the art.

In some implementations, the diverter valve 300 may not comprise the second outlet 303, or the second outlet 303 may be blocked such that no fluid may exit from it. In these implementations, the diverter valve 300 in the first configuration would have a first fluid flow path that is open, and in the second configuration it would have a first fluid flow path that is closed. In the third configuration, it would have a first fluid flow path that is closed, and a third fluid flow path that is open. As such, in these implementations, the diverter valve 300 would function an on/off valve rather than a diverter valve.

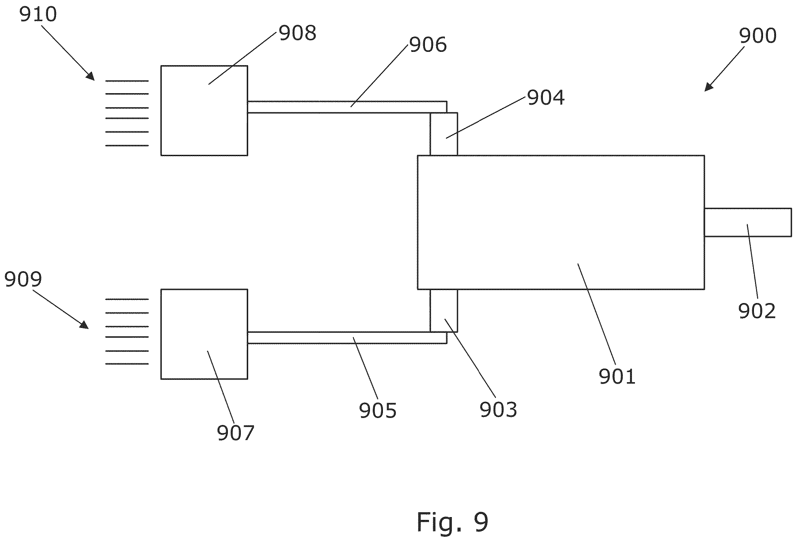

Figure 9 shows schematically an example of a plumbing system 900 incorporating a diverter valve 901.

The diverter valve 901 is a thermally actuated diverter valve and may be any thermally actuated diverter valve according to the present disclosure, e.g. the first example of a diverter valve 100 described above or the second example of a diverter valve 300 described above. The diverter valve 901 comprises an inlet 902, a first outlet 903, and a second outlet 904.

The first outlet 903 is connected to a first end of a first conduit 905. A second end of the first conduit 905 is connected to a first fluid delivery device 907. The first outlet i03 is thus in fluidic communication with the first fluid delivery device 907.

The second outlet 904 is connected to a first end of a second conduit 906. A second end of the second conduit 906 is connected to a second fluid delivery device 908. The second outlet 904 is thus in fluidic communication with the second fluid delivery device 907.

The diverter valve 901 has at least two fluid flow paths along which fluid entering the diverter valve 901 via the inlet 902 may flow. A first fluid flow path leads from the inlet 902 to the first outlet 903. A second fluid flow path leads form the inlet 902 to the second outlet 904.

In use, the diverter valve 901 opens and closes the first and second fluid flow paths depending upon whether the temperature of fluid flowing into the diverter valve 901 is below or at or above a threshold temperature.

When the fluid entering the diverter valve 901 has a temperature below the threshold temperature, it can flow from the inlet 901 to the first outlet 902. Fluid flows along the first fluid flow path from the inlet 902 to the first outlet 903. The first fluid flow path is thus open. The diverter valve 901 is in a first configuration.

When the fluid entering the diverter valve 901 has a temperature at or above the threshold temperature, it is diverted to the second outlet 904. Fluid flows along the second fluid flow path from the inlet i02 to the second outlet 904. The second fluid flow path is thus open. The first fluid flow path is also closed so that no fluid flows from the inlet 902 to the first outlet 903. The diverter valve 901 is in a second configuration.

In some examples, the diverter valve 901 also has the second fluid flow path closed in the first configuration. For example, the first example of a diverter valve 100 described above would be suitable for use as the diverter valve 901 in these examples.

In some other examples, the diverter valve 901 also has the second fluid flow path open in the first configuration. The second example of a diverter valve 300 described above would be suitable for use as the diverter valve 901 in these examples.

The diverter valve 901 may also comprise a bypass mechanism, as discussed above. The bypass mechanism allows a user to, in use, open a third fluid flow path which allows fluid to flow from the inlet 902 to the first outlet 903 even when the first fluid flow path is closed when the temperature of fluid flowing into the valve equals or exceeds the threshold temperature.

The bypass mechanism may allow the user, in use, to close manually the third fluid flow path.

The bypass mechanism may automatically close the third fluid flow path when the temperature of fluid flowing into the diverter valve 901 via the inlet is below the threshold temperature. The second example of a diverter valve 300 as described above would be suitable for this purpose.

Fluid that exits the first outlet 903 proceeds through the first conduit 905 to the first fluid delivery device 907. The first fluid delivery device 907 emits fluid with a first spray pattern 909.

Fluid that exits the second outlet 904 proceeds through the second conduit 904 to the second fluid delivery device 908. The second fluid delivery device 908 emits fluid with a second spray pattern 910.

The first spray pattern 909 may be the same as or different to the second pattern 910. The second spray pattern 910 may have a lower or higher flow rate than the first spray pattern 909.

The plumbing system 900 may therefore be used to divert selectively fluid from the inlet 901 to a first fluid delivery device 907 having a first spray pattern 909 and/or a second fluid delivery device having a second spray pattern 910 depending upon the temperature of fluid flowing into the inlet 901.

Such a plumbing system 900 may be useful as a safety device. The second spray pattern 910 may have a greatly reduced flow rate as compared to the first spray pattern 909 and/or emit fluid in a misting pattern. This allows the plumbing system 900 to cause fluid at a temperature at or above a threshold temperature to be emitted in a manner less likely to cause injury to a user. For example, the threshold temperature may be set to 48°C, and the first spray pattern 909 may be a standard spray pattern that exits a faucet, and the second spray pattern 910 may be a reduced flow rate misting spray pattern that is less likely to cause a user of the plumbing system 900 to suffer burns.

Such a plumbing system 900 may be useful in reducing wasted hot fluid consumption. When the temperature of fluid is at or above a threshold temperature, the system may cause the fluid to be emitted from the plumbing system in a second spray pattern 910 that is of a greatly reduced flow rate compared to the first spray pattern 909. A user may then manually cause the fluid to also be emitted in the first spray pattern 909 using a bypass mechanism.

Such a plumbing system 900 may be useful in signalling to a user that the temperature of water flowing through the plumbing system 900 is equal to or greater than the threshold temperature. This may be done by having the second spray pattern 910 be different from the first spray pattern 909 such that a user would notice the difference between the two spray patterns, e.g. by having the second spray pattern have a reduced flow rate.

When the temperature of fluid flowing into the diverter valve 901 is below the threshold temperature, the diverter valve 902 is in the first configuration and fluid flows from the inlet 902 to the first outlet 903 and then to the first fluid delivery device 907, which emits the fluid in a first spray pattern 909.

When the temperature of fluid flowing into the diverter valve 901 exceeds the threshold temperature, the diverter valve 902 switches to a second configuration and fluid only flows from the second outlet 904, and thus only the second fluid delivery device 908 is emitting fluid, and it is emitting fluid in the second spray pattern 910. The difference between the first spray pattern 909 and the second spray pattern 910 is sufficiently different that the user would notice said difference and thus be informed that the temperature of water flowing through the plumbing system 900 is equal to or greater than the threshold temperature.

The first fluid delivery device 907 and the second fluid delivery device 908 may both be part of a single overall fluid delivery device such as a showerhead or a faucet. The showerhead or faucet may have two different outlet modes, each one corresponding to one of the fluid delivery devices. The fluid delivery devices of the plumbing system 900 may then correspond to different cavities comprises within the overall fluid delivery device.

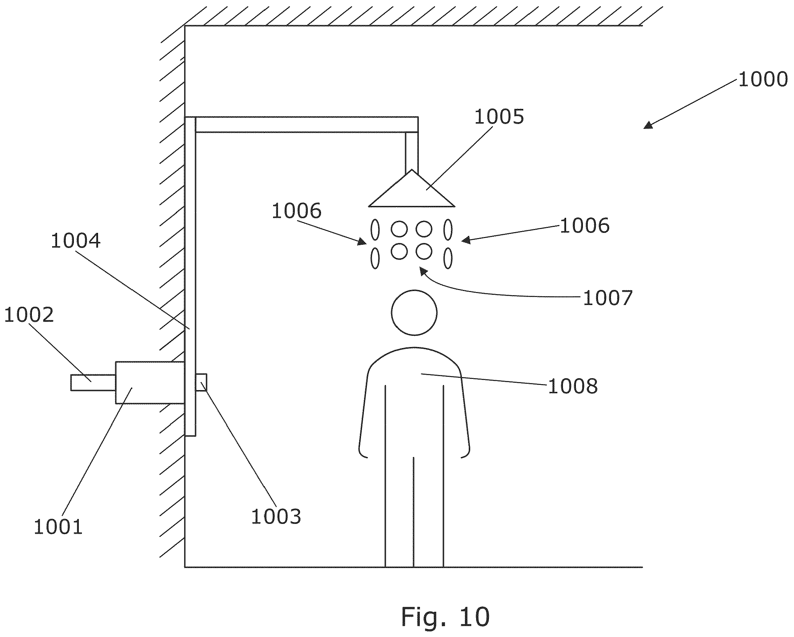

Figure 10 shows schematically an example of an ablutionary system 1000 incorporating a diverter valve 1001. The ablutionary system 1000 is a shower system.

The diverter valve 1001 is a thermally actuated diverter valve. The diverter valve 1001 has an inlet 1002. A bypass actuator 1003 allows a user 1008 to use a bypass mechanism that is part of the diverter valve 1001.

The diverter valve 1001 has two outlets which connect to two separate conduits. The two separate conduits are enclosed in a conduit casing 1004. The conduit casing 1004 guides the two separate conduits to a fluid delivery device 1005. The fluid delivery device is an overhead showerhead.

The diverter valve 1001, the inlet, the two separate conduits, and the fluid delivery device 1005 function like the plumbing system 900 described above.

As such, in use, fluid that flows into the diverter valve 1001 at a temperature below a threshold temperature is communicated to the fluid delivery device 1005 and is emitted by the fluid delivery device in a first spray pattern 1007. In some examples, it is also emitted in a second spray pattern 1006 simultaneously.

When fluid flows into the diverter valve 1001 at a temperature equal to or above a threshold temperature, it is communicated to the fluid delivery device 1005 and is emitted by the fluid delivery device in only the second spray pattern 1006.

The first spray pattern 1007 may have a greater flow rate than the second spray pattern 1006. The user 1008 may notice the difference between the two spray patterns and may be able to infer from the spray patterns emitted by the fluid delivery device 1005 whether the temperature of fluid being emitted by the fluid delivery device 1005 is below or equal to or above the threshold temperature.

The user 1008 may then use the bypass actuator 1003 to use the bypass mechanism of the diverter valve 1001 to cause fluid to be emitted from the fluid delivery device 1005 in the first spray pattern 1007 even when the temperature of the fluid is equal to or above the threshold temperature.

Such an ablutionary system 1000 may be useful in reducing wasted hot fluid consumption. Typically, when a user 1008 wishes to shower using hot water, they must wait for cold water present in the plumbing system to be evacuated and then for water to be heated and supplied to the fluid delivery device 1005. Until this is done, the fluid delivery device 1005 will emit fluid at a temperature colder than the user wishes to use to shower with and once the fluid reaches the threshold temperature, the fluid delivery device 1005 will continue emitting fluid at the same flow rate and if the user does not enter the shower, hot fluid will be wasted.

The present ablutionary system 1000 can mitigate this problem, for example, by reducing the flow rate of fluid being emitted by the fluid delivery device 1005 once the fluid is equal to or above the threshold temperature as described above. The user 1008 is thus informed by the reduced flow rate that the temperature of the shower has reached their desired showering temperature, and they may then use the bypass actuator 1003 to cause the fluid delivery device 1005 to deliver the now-hot fluid at a normal showering flow rate.

Until the user 1008 uses the bypass actuator 1003, hot fluid will flow at a reduced flow rate and thus reduced wasted water consumption.

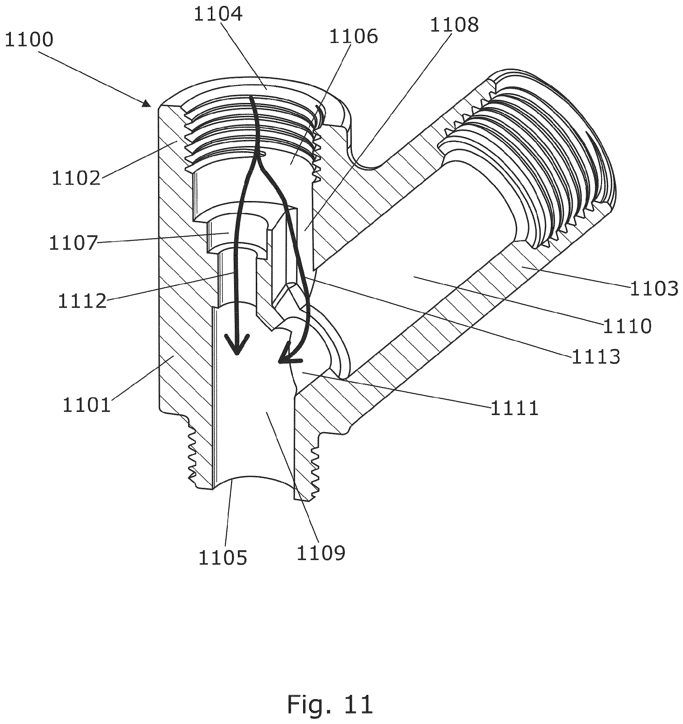

Figures 11 to 15 show another example of a valve. Like numerals are used throughout Figures 11 to 15 to refer to the same feature.

Figure 11 shows a cross-section of a valve housing 1100 used for forming the valve according to the current embodiment.

The valve housing 1100 has a valve body 1101. The valve body 1101 has a first cylindrical portion 1102 and a second cylindrical portion 1103. The second cylindrical portion 1103 is connected at a first end to the first cylindrical portion 1102 at a point along a curved surface of the first cylindrical portion 1102.

A longitudinal axis of the second cylindrical portion 1103 is at an angle with respect to the first cylindrical portion 1102. The angle between the longitudinal axis of the second cylindrical portion 1103 may be at any non-parallel angle with respect to the first cylindrical portion 1102.

An inlet 1104 is formed at a first end of the first cylindrical portion 1102. An outlet 1105 is formed at a second end of the first cylindrical portion 1102. The inlet 1104 and outlet 1105 are situated on opposite end faces of the first cylindrical portion 1102.

An inlet cavity 1106 is formed in the first cylindrical portion 1102. The inlet cavity 1106 is substantially cylindrical and is delimited at a first end by the inlet 1104.

A first channel 1107 is also formed in the first cylindrical portion 1102. A first end of the first channel 1107 is delimited by a second end of the inlet cavity 1106.

A second channel 1108 is also formed in the first cylindrical portion 1102. A first end of the second channel 1108 is also delimited by the second end of the inlet cavity 1106.

Fluid may therefore flow into the valve housing 1100 via the inlet 1104 into the inlet cavity 1106 and then into either the first channel 1107 or the second channel 1108.

The first channel 1107 and the second channel 1108 are fluidically isolated from one another, extending parallel to each other from the inlet cavity 1106.

An outlet cavity 1109 is also formed in the first cylindrical portion 1102. The outlet cavity 1109 is delimited at a first end by a second end of the first channel 1107. The outlet cavity 1109 is delimited at a second end by the outlet 1105.

A valve member cavity 1110 is formed in the second cylindrical portion 1103. The valve member cavity 1110 is substantially cylindrical and runs through the length of the second cylindrical portion 1103.

A valve member cavity opening 1111 is formed at a first end of the valve member cavity 1110, where it joins the first cylindrical portion 1102. The valve member cavity opening 1111 allows fluidic communication between the valve member cavity 1110 and the outlet cavity 1109.

A second end of the second channel 1108 opens into the valve member cavity 1110 adjacent to where the valve member cavity joins the outlet cavity 1109.

Fluid that has flown from the inlet 1104 into the first channel 1107 may therefore flow into the outlet cavity 1109 and out of the valve housing 1100 via the outlet 1105. Fluid that has flown from the inlet 1104 into the second channel 1108 may therefore flow into the valve member cavity 1110 and then through the valve member cavity opening 1111 and into the outlet cavity 1109 and out of the valve housing 1100 via the outlet 1105.

A first arrow 1112 shows a portion of the first fluid flow path. A second arrow 1113 shows a portion of the second fluid flow path.

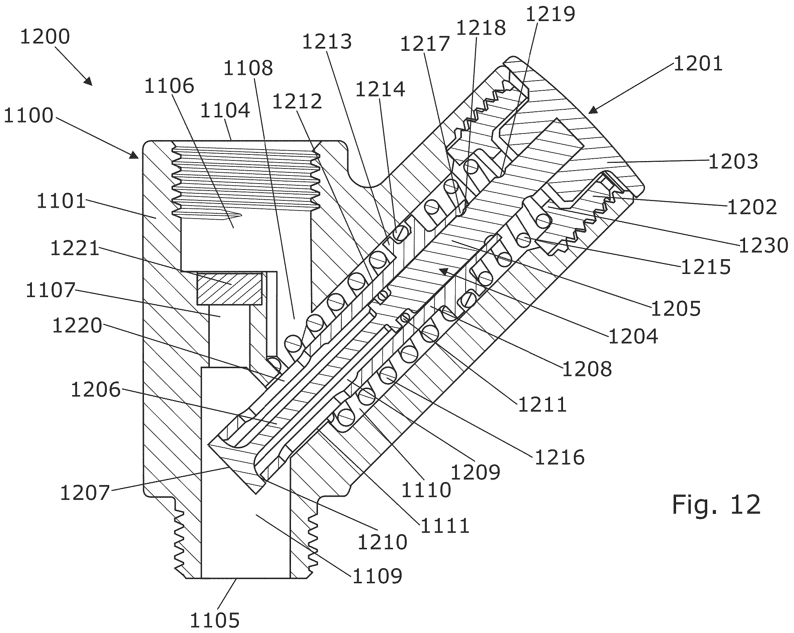

Figure 12 shows a cross-section of a valve 1200 formed using the housing 1100 of Figure 11. The valve 1200 is depicted in a first configuration in Figure 12, termed the "resting configuration" hereon.

A valve member 1201 is disposed partially in the valve member cavity 1110. In the resting configuration, a portion of the valve member 1201 extends into the outlet cavity 1109.

A securing piece 1202 is also present in the valve member cavity 1110 and is disposed towards a second end of the valve member cavity 1110, the second end being opposite to the first end of the valve member cavity 1110. In this example, the securing piece 1202 is secured to the walls of the valve member cavity 1110 via a threaded portion of the walls of the valve member cavity 1110. In other examples, other methods may be used to secure the securing piece 1202 or the securing piece 1202 may be formed integrally with the valve body 1101.

The securing piece 102 has approximate cylindrical symmetry. The securing piece 102 comprises a cavity and has an open first and second end. The securing piece 102 comprises an annular ring 1230 that extends radially inwards into the cavity of the securing piece 102.

The valve member 1201 comprises a bypass button 1203. The bypass button 1203 is disposed at a first end of the valve member 1201 and is disposed partially external to the valve housing 1100 and partially within the valve housing 1100. A portion of the bypass button 1203 that is within the valve housing 1100 extends into a hollow formed in the securing piece 1202.

In the resting configuration, a portion of the bypass button 1203 that is external to the valve housing 1100 makes contact with an external surface of the valve housing 1100 such that the bypass button 1203 cannot be translated further towards the valve housing 1100.

The valve member 1201 further comprises an inner control shaft 1204. The inner control shaft 1204 is comprised of an upper portion 1205, a flow portion 1206, and an end portion 1207. The inner control shaft 1204 has approximate cylindrical symmetry.

A first end of the upper portion 1205 is connected to the bypass button 1203. The upper portion 1205 has a first diameter. In the resting configuration, as depicted in Figure 12, the upper portion 1205 passes through the cavity of the securing piece 1202.

A first end of the flow portion 1206 is connected to a second end of the upper portion 1205, the second end of the upper portion 1205 being opposite the first end of the upper portion 1205. The flow portion 1206 has a second diameter that is smaller than the first diameter.

The end portion 1207 is connected to a second end of the flow portion 1206, the second end of the flow portion 1206 being opposite to the first end of the flow portion 1206.

The end portion 1207 has a third diameter, the third diameter being greater than both the first diameter and the second diameter.

In the resting configuration, the end portion 1207 is disposed within the outlet cavity 1109. The upper portion 1205 is disposed within the valve member cavity 1110. The flow portion 1206 is disposed partially in the valve member cavity 1110 and partially in the outlet cavity 1109. The flow portion 1206 thus extends through the valve member cavity opening 1111.

The valve member 1201 further comprises an outer control shaft 1208. The outer control shaft 1208 is approximately cylindrically symmetrical. The outer control shaft 1208 is hollow and comprises an interior cavity 1209. The interior cavity 1209 has a substantially constant diameter along its length, The diameter of the interior cavity is slightly larger than the first diameter of the upper portion 1205 of the inner control shaft 1204, and slightly smaller than the third diameter of the end portion 120.

In the resting configuration, the flow portion 1206 of the inner control shaft 1204 is disposed entirely within the interior cavity 1209. A portion of the upper portion 1205 is also disposed within the interior cavity 1209.

In the resting configuration, a lower end 1210 of the outer control shaft 1208 is in contact with an upper surface of the end portion 1207, the upper surface of the end portion 1207 being a surface of the end portion 1207 that is closest to the flow portion 1206. In the resting configuration, the upper surface of the end portion 1207 acts to seal the interior cavity 1209.

The outer control shaft 1208 comprises an annular protrusion 1217 that extends into the interior cavity 1209. The annular protrusion 1217 is configured to engage with a first annular indentation 1218 or a second annular indentation 1219 formed on the upper portion 1205 of the inner control shaft 1204. The annular protrusion 1217 and first annular indentation 1218 or second annular indentation 1219 work together by engaging with one another to releasably couple the inner control shaft 1204 to the outer control shaft 1208. The second annular indentation 1219 is disposed further towards the bypass button 1203 than the first annular indentation 1218 is.

The annular protrusion 1217 may be configured to releasably snap-fit with the first annular indentation 1218 and/or the second annular indentation 1219. The annular protrusion 1217 may be configured to stay engaged with the first annular indentation 1218 and/or the second annular indentation 1219 via frictional forces between the annular protrusion 1217 and the indentations.

In the resting configuration, the annular protrusion 1217 is engaged with the first annular indentation 1218.

A first sealing member 1211 is disposed around a circumference of the upper portion 1205 of the inner control shaft 1204. The first sealing member 1211 is disposed within a recess comprised in the upper portion 1205.

The first sealing member 1211 is configured to make sealing contact with the inner control shaft 1204 and a wall of the interior cavity 1209, thereby preventing fluid from flowing past the first sealing member 1211. The first sealing member 1211 may be comprised of rubber.

The outer control shaft 1208 has an exterior side 1212. A ridge 1213 extends from the exterior side 1212. Apart from the ridge 1213, the exterior side 1212 has a diameter that is slightly smaller than a diameter of the valve member cavity opening 1111. The diameter of the exterior side 1212 is such that it allows the outer control shaft 1208 to translate within the valve member cavity 1110.

The ridge 1213 has a diameter that is greater than the diameter of the rest of the exterior side 1212. A second sealing member 1214 is disposed around a circumference of the ridge 1213. The second sealing member 1214 is disposed within a recess comprised in the ridge 1213.

The second sealing member 1214 is configured to make sealing contact with the exterior side 1212 and a wall of the valve member cavity 1110, thereby preventing fluid from flowing past the second sealing member 1214. The second sealing member 1214 may be comprised of rubber.

The valve member 1201 further comprises a bias spring 1215. The bias spring 1215 is disposed in compression between an upper side of the ridge 1213 and a lower surface of the annular ring 1230 of the securing piece 1202. The bias spring 1215 surrounds the outer control shaft 1208.

The valve member 1201 further comprises a shape memory alloy (SMA) spring 1216. The SMA spring 1216 is disposed in compression between a lower side of the ridge 1213 and a portion of the valve body 1101 that surrounds the valve member cavity opening 1111. The lower side of the ridge 1213 is opposite the upper side of the ridge 1213. The SMA spring 1216 is made of an alloy which has a memory of its form which was set during its manufacture. The SMA spring 1216 can be deformed as per any other spring, but when it is heated, it will try to return to the form it was in when it was manufactured. This results in an increase in stiffness of the SMA spring 1216 when it is experiences an increase in its temperature, i.e. the SMA spring 1216 experiences an increase in its spring constant when it experiences an increase in its temperature.

The combination of the bias spring 1215 and the SMA spring 1216 creates a thermal actuator.

The valve member 1201 is movably disposed within the valve housing 1100 and is capable of sliding back and forth in the valve member cavity 1110.

The securing piece 1202 is immovably disposed within the valve member cavity 1110.

In the resting configuration, the bias spring 1215 exerts a greater force on the upper side of the ridge 1213 than the SMA spring 1216 exerts on the lower side of the ridge 1213. The outer control shaft 1208 is thus forced towards the valve member cavity opening 1111. As the inner control shaft 1204 is coupled to the outer control shaft 1208, the inner control shaft 1204 is also forced towards the valve member cavity opening 1111. As the bypass button 1203 is connected to the inner control shaft 1204, the bypass button 1203 is also forced towards the valve member cavity opening 1111.

As mentioned previously, in the resting configuration, a portion of the bypass button 1203 makes contact with an external side of the valve housing 1100, and this contact provides a normal force which resists further movement of valve member 1201.

Thus, in the resting configuration, the valve member 1201 is at rest.

The outer control shaft 1208 further comprises a plurality of openings 1220. The openings 1220 are disposed towards the lower end 1210 of the outer control shaft 1208. The openings 1220 permit fluid to flow into the interior cavity 1209. The openings 1220 are the only means by which fluid may flow into or out of the interior cavity 1209 in the resting configuration.

In the resting configuration, the outer control shaft 1208 is disposed partially in the valve member cavity 1110 and partially in the outlet cavity 1109. The openings 1220 are disposed such that in the resting configuration they extend a length of the outer control shaft 1208 such that they are disposed partially in the valve member cavity 1110 and partially in the outlet cavity 1109.

The valve 1200 further comprises a flow regulator 1221. The flow regulator 1221 is disposed within the first channel 1107. In this example, the flow regulator 1221 is configured to allow fluid to flow through it a maximum rate of approximately 3 litres per minute. In other examples, the flow regulator 1221 may be configured to allow fluid to flow through it a different maximum rate.

The flow regulator 1221 is disposed in the first channel 1107 such that substantially all of the fluid flowing into the first channel 1107 has to flow through the flow regulator 1221.

In the resting configuration, fluid may flow into the valve 1200 via the inlet 1104 and then out of the valve 1200 via the outlet 1105 by flowing along two different fluid flow paths.

A first fluid flow path leads from the inlet 1104 through the inlet cavity 1106 and then into the flow regulator 1221. The flow regulator 1221 restricts the maximum rate of fluid flow through it to approximately 3 litres per minute. The fluid then continues to flow through the first channel 1107 and into the outlet cavity 1109, whereupon the fluid proceeds to exit the valve 1200 via the outlet 1105.

A second fluid flow path leads from the inlet 1104 through the inlet cavity 1106 and then into the second channel 1108. The fluid then flows from the second channel 1108 into the valve member cavity 1110 whereupon it flows over the SMA spring 1216. The fluid then flows into the interior cavity 1209 via the openings 1220. The fluid also exits the interior cavity 1209 via the openings 1220, but flows into the outlet cavity 1109, whereupon the fluid proceeds to exit the valve 1200 via the outlet 1105.

The second fluid flow path does not act to restrict the flow rate of fluid flowing along it in the resting configuration. Fluid may flow along the second fluid flow path at approximately the same flow rate at which it enters the second channel 1108.

In the resting configuration, fluid that flows into the valve 1200 via the inlet 1104 flows out of the valve 1200 via the outlet 1105 at a first flow rate.

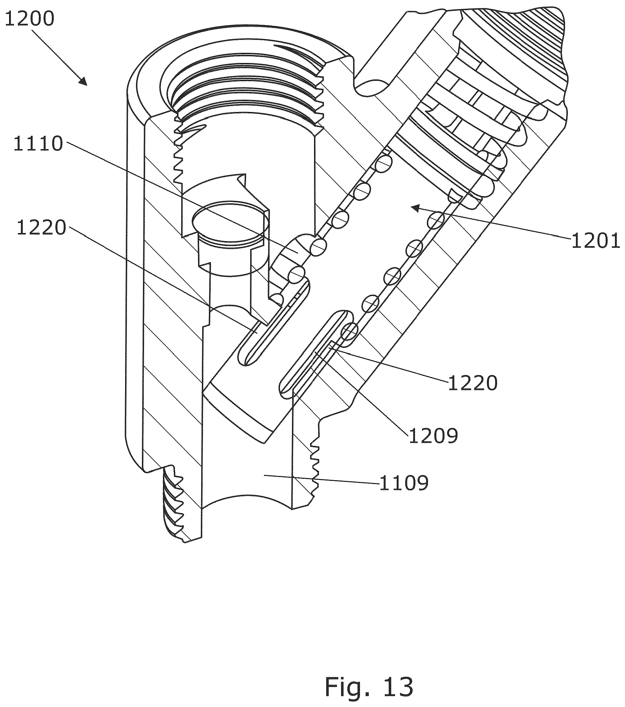

Figure 13 shows another cross-sectional view of the valve 1200 shown in Figure 12.

In Figure 13, a 3D representation of the valve member 1201 is shown and the valve 1200 is in the resting configuration. The openings 1220 are visible and it can be seen how they allow access to the interior cavity 1209 and extend such that they are disposed partially within the valve member cavity 1110 and the outlet cavity 1109.

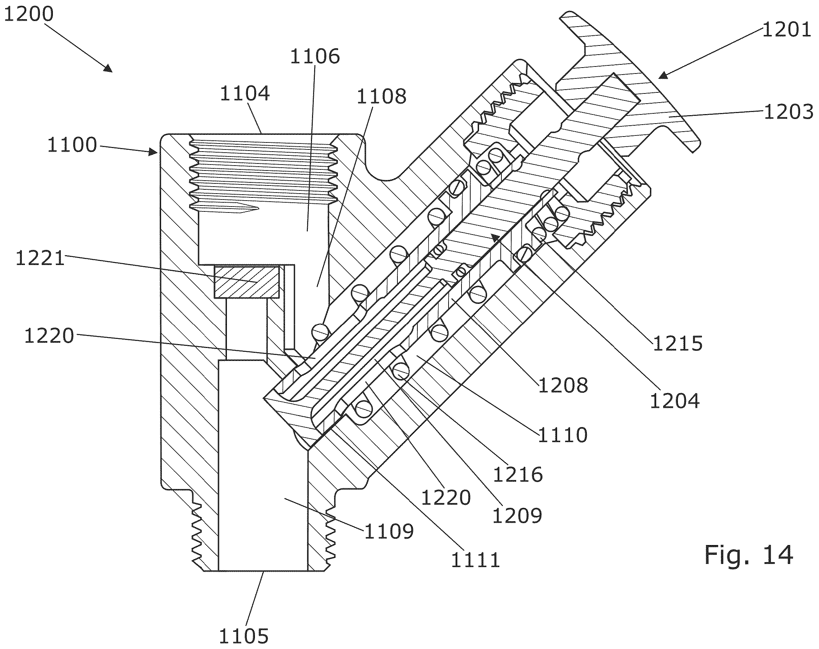

Figure 14 shows another cross-sectional view of the valve 1200. The valve 1200 is in a second configuration, termed the "warmed-up configuration" hereon.

In the warmed-up configuration, the temperature of the SMA spring 1216 has been increased and its spring constant has increased as a result. The SMA spring 1216 has expanded and the bias spring 1215 has been compressed further.

The valve member 1201 is now disposed such that the openings 1220 are disposed wholly within the valve member cavity 1110 - i.e. the openings 1220 do not extend into the outlet cavity 1109 as they did in the resting configuration described above in reference to Figure 12.

The outer control shaft 1208 is disposed further towards the securing piece 1202 in the warmed-up configuration than it is in the resting configuration.

In the warmed-up configuration, the inner control shaft 1204 extends partially out of the valve housing 1100 and the bypass button 1203 is disposed such that it is wholly external to the valve housing 1100.

In the warmed-up configuration, fluid may flow into the valve 1200 via the inlet 1104 and then out of the valve 1200 via the outlet 1105 via one main fluid flow path.

The main fluid flow path is the same as the first fluid flow path described above in reference to Figure 12.

Fluid may not flow via the second fluid flow path described above in reference to Figure 12 as fluid that flows into the interior cavity 1209 may no longer then flow into the outlet cavity 1109. The openings 1220 do not extend into the outlet cavity 1109 and there is thus no route by which fluid may flow into the interior cavity 1209 and then into the outlet cavity 1109.

A negligible amount of fluid may flow into the valve member cavity 1110 and then around the outer control shaft 1208 and through the valve member cavity opening 1111 into the outlet cavity 1109 as the outer control shaft 1208 does not form a sealing contact with the valve member cavity opening 1111 in this example in the warmed-up configuration. In other examples, such a sealing contact may be formed, and fluid may be completely prevented from flowing into the outlet cavity 1109 from the valve member cavity 1110.

As such, in the warmed-up configuration, fluid flows through the valve 1200 primarily via the first fluid flow path and a further negligible amount of fluid flows from the inlet 1104, into the inlet cavity 1106, then into the second channel 1108 and into the valve member cavity 1110, around the outer control shaft 1208, through the valve member cavity opening 1111, and into the outlet cavity 1109 whereupon it proceeds to exit the valve 1200 via the outlet 1105.

As the first fluid flow path allows fluid to flow through the valve 1200 from the inlet 1104 to the outlet 1105 at a maximum rate of approximately 3 litres per minute, and the only other flow of fluid through the valve 1200 is of a negligible flow rate, the valve 1200 in the warmed-up configuration restricts the flow of fluid through it to a maximum rate of approximately 3 litres per minute. In other examples, varying the maximum flow rate at which the flow regulator 1221 permits fluid to flow through it may allow the valve 1200 in its warmed-up configuration to allow fluid to flow through it at a different rate.

In the warmed-up configuration, fluid flows through the valve 1200 at a second flow rate. The second flow rate is less than the first flow rate.

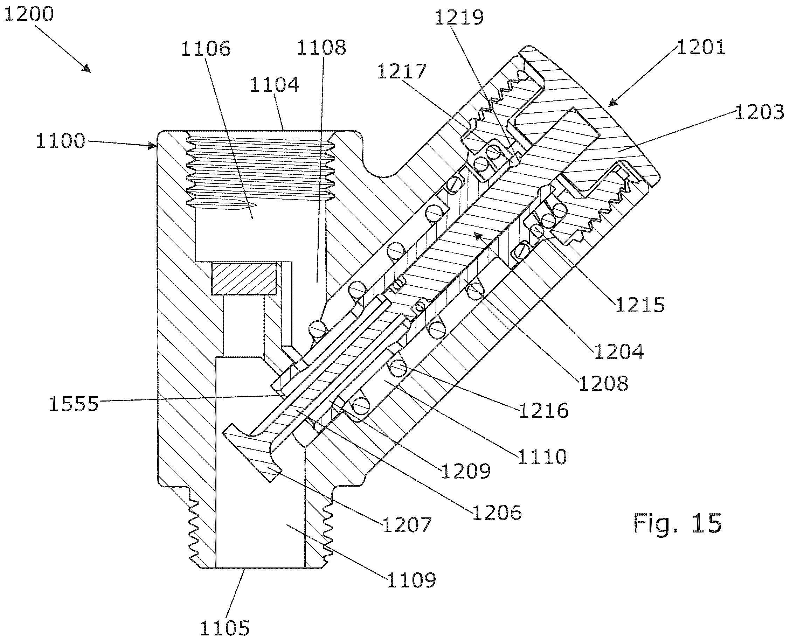

Figure 15 shows another cross-section view of the valve 1200 shown in Figure 12.

In Figure 15, the valve 1200 is in a third configuration, termed the "bypass configuration" hereon.

In the bypass configuration, the outer control shaft 1208, the SMA spring 1216, and the bias spring 1215 are in the same arrangement that they are in the warmed-up configuration described above in reference to Figure 14.

The inner control shaft 1204 is disposed such that it is in the same position relative to the valve housing 1100 as it is in the resting configuration described above in reference to Figure 12. This is achieved by a user pressing the button, for example.

The inner control shaft 1204 is coupled to the outer control shaft 1208 via engagement between the annular protrusion 1217 and the second annular indentation 1219.

In the bypass configuration, the upper surface of the end portion 1207 is disposed such that it is away from the lower end 1210 of the outer control shaft 1208. As such, the end portion 1207 of the inner control shaft 1204 no longer seals the interior cavity 1209. A flow hole 1555 of the outer control shaft 1208 is visible in Figure 14.

The flow portion 1206 of the inner control shaft 1204 is disposed partially within the outlet cavity 1109.

In the bypass configuration, fluid may flow through the valve 1200 from the inlet 1104 to the outlet 1105 via the first fluid flow path and a third fluid flow path. Fluid may also flow via the route which has a negligible flow rate as described above in reference to Figure 13.

Fluid that flows along the third fluid flow path flows into the valve 1200 via the inlet 1104, then into the inlet cavity 1106. The fluid then flows into the second channel 1108 and into the valve member cavity 1110. The fluid then flows into the interior cavity 1209 via the openings 1220 whereupon it flows through the interior cavity 1209 and out of the interior cavity 1209 into the outlet cavity 1109 via the flow hole 1555. The fluid then flows out of the valve 1200 via the outlet 1105.

As such, in the bypass configuration fluid flows through the valve 1200 via the first fluid flow path at a maximum flow rate of approximately 3 litres per minute and flows through the valve 1200 via the third fluid flow path at a flow rate that is not restricted - i.e. the flow rate of fluid via the third fluid flow path is approximately the same as the rate at which fluid flows into the second channel 1108.

As such, in the bypass configuration, fluid flows through the valve 1200 at a third flow rate. The third flow rate is greater than the second flow rate. The third flow rate may be greater than, equal to, or less than the first flow rate.

In use, when fluid having a temperature below a threshold temperature flows into the valve 1200, the valve 1200 adopts the resting configuration. In this configuration, fluid flows through the valve 1200 via the first fluid flow path and the second fluid flow path. Fluid flows through the valve 1200 at the first flow rate. The first flow rate may be substantially the same as the rate fluid flows into the valve 1200 via the inlet 1104 at.

The fluid that flows into the valve 1200 flows over the SMA spring 1216 and there is heat transfer between the fluid and the SMA spring 1216. Below the threshold temperature, the spring constant of the SMA spring 1216 is such that it exerts a smaller force on the lower side of the ridge 1213 than the bias spring 1215 exerts on the upper side of the ridge 1213. As such, the valve is maintained in the first configuration.

As the temperature of fluid flowing into the valve 1200 rises and approaches the threshold temperature, the heat transfer between the fluid and the SMA spring 1216 causes an increase in the spring constant of the SMA spring 1216, thereby increasing the force that the SMA spring 1216 exerts on the lower side of the ridge 1213. This force increases until it overcomes the force that the bias spring 1215 exerts on the upper side of the ridge 1213. This results in the outer control shaft 1208, and thus the valve member 1201 as a whole being translated away from the valve member cavity opening 1111 and towards the securing piece 1202. This movement results in the bias spring 1215 being placed in further compression, thereby increasing the force it exerts on the upper side of the ridge 1213.

At any given temperature of fluid flowing into the valve 1200 below the threshold temperature, a steady state exists due to the balancing of forces exerted on the lower and upper sides of the ridge 1213 by the SMA spring 1216 and bias spring 1215 respectively. Each steady state corresponds to a different position of the outer control shaft 1208 relative to the valve housing 1100. This is because the position of the outer control shaft 1208 relative to the valve member cavity opening 1111 and the securing piece 1202 determines the compression of the SMA spring 1216 and the bias spring 1215.

The outer control shaft 1208 may be positioned at any position between the positions it is in in the resting configuration and the warmed-up configuration. As the temperature of fluid flowing into the valve 1200 increases, the outer control shaft 1208 is translated from the positions it is in in the resting configuration towards the position it is in in the warmed-up configuration.

Below the threshold temperature, as the temperature of fluid flowing into the valve 1200 increases, the second fluid flow path remains open but the flow rate of fluid through it decreases as the temperature of fluid flowing into the valve 1200 increases. This is caused by the outer control shaft 1208 being translated away from the valve member cavity opening 1111 and towards the securing piece 1202. This in turn reduces the length of the openings 1220 that are disposed in the outlet cavity 1109, thereby reducing the area through which fluid may flow from the interior cavity 1209 into the outlet cavity 1109. This effectively reduces the flow rate of fluid flowing via the second fluid flow path.

Therefore, below the threshold temperature, as the temperature of fluid flowing into the valve 1200 increases, the flow rate of fluid flowing through the valve 1200 gradually decreases from the first flow rate.

As the temperature of fluid flowing into the valve 1200 increases up to the threshold temperature, the flow rate of fluid through the valve 1200 decreases from the first flow rate to the second flow rate, reaching the second flow rate when the temperature of fluid flowing into the valve 1200 is equal to the threshold temperature.

When fluid flows into the valve 1200 via the inlet 1104 with a temperature at or above the threshold temperature, the valve 1200 adopts the warmed-up configuration. In the warmed-up configuration, the first fluid flow path is still open, but the second fluid flow path is now closed. Fluid then flows through the valve 1200 at the second flow rate. The second flow rate is less than the first flow rate.

When the valve is in the warmed-up configuration, a user may press the bypass button 1203 towards the valve housing 1100 in order to cause the valve 1200 to transition to the bypass configuration.

Pressing the bypass button 1203 exerts a force on the inner control shaft 1204, causing it to translate away from the securing piece 1202 and towards the valve member cavity opening 1111. The SMA spring 1216 resists movement of the outer control shaft 1208. The force with which the bypass button 1203 is pressed exerts a greater force on the inner control shaft 1204 than the force necessary disengage the annular protrusion 1217 form the first annular indentation 1218. The force of pressing the bypass button 1203 therefore causes the inner control shaft 1204 to uncouple from the outer control shaft 1208 via the annular protrusion 1217 being disengaged from the first annular indentation 1218.

When the bypass button 1203 is put into contact with the external surface of the valve housing 1100 by the user pressing it, the inner control shaft 1204 again couples with the outer control shaft 1208 via the annular protrusion 1217 being engaged with the second annular indentation 1219.

The valve 1200 is thus placed into the bypass configuration.

In the bypass configuration, the first fluid flow path is open, the second fluid flow path is closed, and the third fluid flow path is open. Fluid therefore flows through the valve 1200 in the bypass configuration at a third flow rate. The third flow rate is greater than the second flow rate. The third flow rate may be substantially the same as the first flow rate. The third flow rate may be substantially equal to the flow rate at which fluid flows into the valve 1200 via the inlet 1104.

The valve 1200 transitions from the bypass configuration to the resting configuration when the temperature of the SMA spring 1216 decreases below the threshold temperature. This may be caused by fluid below the threshold temperature flowing into the valve 1200 or by the SMA spring 1216 cooling down when no fluid is incident upon it - i.e. when no fluid flows into the valve 1200.

When the temperature of the SMA spring 1216 decreases below the threshold temperature, the bias spring 1215 exerts a greater force on the upper side of the ridge 1213 than the SMA spring 1216 exerts on the lower side of the ridge 1213 due to the spring constant of the SMA spring 1216 decreasing. This causes the outer control shaft 1208 to be translated away from the securing piece 1202 and towards the valve member cavity opening 1111.

Translation of the inner control shaft 1204 further towards the valve member cavity opening 1111 is restricted by the bypass button 1203 being unable to translate further towards the valve housing 1100 because the bypass button 1203 is already in contact with the valve housing 1100.

The force that the bias spring 1215 exerts on the outer control shaft 1208 is greater than the force necessary disengage the annular protrusion 1218 form the second annular indentation. The movement of the outer control shaft 1208 therefore causes the inner control shaft 1204 to uncouple from the outer control shaft 1208 via the annular protrusion 1217 disengaging from the second annular indentation.

The outer control shaft 1208 translates such that the lower end 1210 of the outer control shaft 1208 is in contact with the upper surface of the end portion 1207 of the inner control shaft 1204, thereby blocking the flow hole 1555.

The valve 1200 is thus returned to the resting configuration.

The response of the valve 1200 to the temperature of fluid flowing through to it may be tuned by varying the properties of the SMA spring 1216 and the bias spring 1215. The threshold temperature may be tuned. The response of the valve 1200 as temperature increases may also be tuned - for example one could vary the properties of the SMA spring 1216 and the bias spring 1215 to reduce or increase the range of temperatures over which the flow rate of fluid exiting the valve 1200 varies.

**In** place of the flow regulator 1221, an alternative means of controlling/limiting flow rate could be employed. For example, the first channel **1107** could be shaped and/or sized such that it only permits fluid to flow through it at a given flow rate.

In place of the SMA spring 1216 and bias spring 1215, one could use another resiliently deformable member and a separate thermostat or other thermally responsive actuator - e.g. the thermostat and spring system described in reference to Figures 1 to 8 above. The SMA spring 1216 and bias spring 1215 are one example of how the valve 1200 can be configured to react to the temperature of fluid flowing through it and the person skilled in the art will now appreciate that there are other mechanisms that could be employed instead.

**In** some implementations, the valve 1200 may not exhibit the gradual temperature dependent changes in flow rate as described above. Instead, a snap-action thermally responsive actuator may be used in place of the SMA spring 1216 and the valve 1200 may transition from the resting configuration to the warmed-up configuration when fluid flowing into the valve 1200 is at the threshold temperature and the valve 1200 may not respond to any temperatures of fluid that flow into the valve 1200 below the threshold temperature.

Such a valve 1200 may be used in an ablutionary system, for example in a showering system. Usually when a user wishes to have a shower, they wish to have it above a certain temperature - a threshold temperature. However, when a shower is first turned on, there is usually cold water still present in the plumbing and this must first exit the plumbing before temperature at or above the threshold temperature can flow from the shower. In addition, water heating systems such as a boiler may take a period of time before they are able to supply water that has been heated to the threshold temperature, this can also result in water colder than the threshold temperature from flowing the shower.

When the valve 1200 is used in a showering system, the inlet 1104 may be connected to a heated water supply, and the outlet 1105 may be connected to a showerhead. It will be apparent to the skilled person that the valve 1200 may be used in many different ways in an ablutionary system and the example we are currently giving is not intended to, nor will it be interpreted as, limiting.

Then, when a user wishes to have a shower, they will turn on the shower such that water begins to flow through the valve 1200 and out of the showerhead. While the temperature of the water flowing into the valve 1200 is below the threshold temperature, the valve will be in the resting configuration and provide water from the outlet 1105 at a first flow rate. Therefore, water will flow from the showerhead at a first flow rate.

As the temperature of water flowing into the valve 1200 increases to the threshold temperature, the valve 1200 will transition from the resting configuration to the warmed-up configuration in the manner described above. This will result in the flow rate of water exiting the outlet 1105 of the valve 1200 decreasing as temperature increases and therefore water flowing from the showerhead will experience a decrease in flow rate.

When the temperature of water flowing into the valve 1200 reaches the threshold temperature, the valve 1200 will transition to the warmed-up configuration. This will result in the flow of water exiting the outlet 1105 of the valve 1200 being equal to the second flow rate. Therefore, water flowing from the showerhead will flow at the second flow rate. The second flow rate is less than the first flow rate.

Typically, a user starts a shower and may then proceed to do other activities while they wait for the shower to heat up. Users also typically do not have a means to identify that the water flowing from the showerhead is up to temperature without physically touching the water to check its temperature.

The valve 1200, by reducing the flow of water flowing from the showerhead once the water is at or above the threshold temperature by transitioning to the warmed-up configuration, both reduces wastage of water and signals to the user by means of the reduced flow rate that the shower is now providing water at a temperature equal to or above the threshold temperature.

When the user is ready to enter the shower, they can use the bypass button 1203 to cause the valve 1200 to transition to the bypass configuration and thus cause water to flow out of the valve 1200 at the third flow rate. This, in turn, causes water to flow from the showerhead at the third flow rate. The third flow rate is greater than the second flow rate. The third flow rate may be equal to the first flow rate.

Once the valve 1200 is in the bypass configuration, the user may use the shower as normal. When the user is done showering and shuts off the supply of water to the valve 1200, the SMA spring 1216 in the valve 1200 will cool down and the valve 1200 will return to the resting configuration, thereby being ready again for future use.

**In** place a shower system, the valve 1200 may be used in any ablutionary system which emits fluid. The ablutionary system may be configured to emit water that flows from the outlet 1105 of the valve 1200.

Such an ablutionary system may be useful as a safety device. The second flow rate may be substantially lower than the first flow rate. This allows the ablutionary system to cause fluid at a temperature at or above a threshold temperature to be emitted in a manner less likely to cause injury to a user. For example, the threshold temperature may be set to 48°C.

Such an ablutionary system may be useful in reducing wasted hot fluid consumption.

When the temperature of fluid is at or above a threshold temperature, the system may cause the fluid to be emitted from the ablutionary system at a reduced threshold compares to when the temperature of fluid is below the threshold temperature.

Such an ablutionary system may be useful in signalling to a user that the temperature of water flowing through the ablutionary system is equal to greater than the threshold temperature. This may be done by the having the second flow rate be less than the first flow rate by an amount such that it would be noticeable to a user.

The illustrations of the examples described herein are intended to provide a general understanding of the structure of the various examples. The illustrations are not intended to serve as a complete description of all the elements and features of apparatus and systems that utilise the structures or methods described herein. Many other examples may be apparent to those of skill in the art upon reviewing the disclosure. Additionally, the illustrations are merely representational and may not be drawn to scale. Certain proportions within the illustrations may be exaggerated, while other proportions may be minimised. Accordingly, the disclosure and figures are to be regarded as illustrative rather than restrictive.

While this specification contains many specifics, these should not be construed as limitations on the scope of the invention or of what may be claimed, but rather as a description of features specific to particular implementations. Certain features that are described in this specification in the context of separate examples can also be implemented in combination in a single example. Conversely, various features that are described in the context of a single example can also be implemented in multiple examples separately or in any suitable sub-combination. Moreover, although features may be described above as acting in certain combinations and even initially claimed as such, one or more features from a claimed combination can in some cases be excides from the combination, and the claimed combination may be directed to a sub-combination or variation of a sub-combination.

This disclosure is intended to cover any and all subsequent adaptations or variations of various examples. Combinations of the above examples, and other examples not specifically described herein, should be apparent to those of skill in the art upon reviewing the description.

It is intended that the foregoing detailed description be regarded as illustrative rather than limiting and it is understood that the following claims including all equivalents are intended to define the scope of the invention. The claims should not be read as limited to the described order or elements unless stated to that effect. Therefore, all examples that come within the scope and spirit of the following claims and equivalents thereto are claimed as the invention.

It will be understood that the invention is not limited to the embodiments described above. Various modifications and improvements can be made without departing from the concepts disclosed herein. Except where mutually exclusive, any of the features may be employed separately or in combination with any other features and the disclosure extends to all combinations and sub-combinations of any one or more features disclosed herein.

## Claims

1. A valve including:
an inlet;
a first outlet; and
a thermally actuated closing member operable to cause the diverter valve to transition from a first configuration to a second configuration;
wherein, in the first configuration a first fluid flow path from the inlet to the first outlet is open and in the second configuration the first fluid flow path is closed.

2. The valve of claim 1, wherein the thermally actuated closing member is configured to cause the valve to transition from the first configuration to the second configuration when fluid flowing into the inlet of the valve has a temperature equal to or above a threshold temperature and/or wherein the thermally actuated closing member is mechanically operated.

3. The valve of claim 1 or claim 2, wherein the valve is configured to switch automatically from the second configuration to the first configuration when fluid flowing into the inlet of the valve has a temperature below a threshold temperature.

4. The valve of claim 3 comprising a resiliently deformable member configured to urge the thermally actuated closing member towards a position, in which the valve is in the first configuration.

5. The valve of any one of the preceding claims, wherein the valve is configured to be in the first configuration when fluid flowing into the inlet of the valve has a temperature below a threshold temperature.

6. The valve of any one of the preceding claims including a second outlet and having a second fluid flow path from the inlet to the second outlet.

7. The valve of claim 7, wherein the second fluid flow path is open in the first configuration, or the second fluid flow path is closed in the first configuration and/or wherein the second fluid flow path is open in the second configuration.

8. The valve of claim 6 or claim 7, wherein the valve has a first flow rate of fluid exiting the first and/or second outlets in the first configuration and a second flow rate of fluid exiting the first and/or second outlets in the second configuration, the first flow rate being greater than the second flow rate.

9. The valve of claim 10, wherein the first flow rate is greater than the second flow rate.

10. The valve of claim 10 or claim 11, wherein the first flow rate is substantially the same as the rate of fluid flow into the inlet.

11. The valve of any one of the preceding claims including a bypass mechanism configured to cause the valve to transition from the second configuration to a third configuration, wherein in the third configuration a third fluid flow path from the inlet to the first outlet is open.

12. The valve of claim 10, wherein one or more of:
the first fluid flow path is closed in the third configuration; and/or
the or a second fluid flow path is open in the third configuration; and/or
the bypass mechanism is user-operable; and/or
the bypass mechanism comprises a lockable bypass mechanism which, once it is activated, keeps the valve in the third configuration until the bypass mechanism is reset; and/or
the bypass mechanism is configured to reset and thereby open the third fluid flow path when the temperature of fluid flowing into the inlet of the valve has a temperature below a threshold temperature.

13. A plumbing system including:
the valve of any one of claims 1 to 12.

14. The plumbing system of claim 13 comprising:
a first fluid delivery device or a first set of one or more fluid delivery outlets in fluidic communication with the first outlet, wherein the first fluid delivery device or the first set of one or more fluid delivery outlets is operable to emit fluid in a first spray pattern; and/or
comprising a second fluid delivery device or a second set of one or more fluid delivery outlets in fluidic communication with the or a second outlet, wherein the second fluid delivery device or the second set of one or more fluid delivery outlets is operable to emit fluid in a second spray pattern, optionally wherein the first spray pattern is different from the second spray pattern and/or the first spray pattern has a different flow rate from the second spray pattern.

15. The plumbing system of claim 14, wherein the first fluid delivery device includes a tap, a faucet or a spray head for a shower.
